# EUROPÄISCHE PATENTSCHRIFT

(11) **EP 4 198 352 B1**
(45) Veröffentlichungstag und Bekanntmachung des Hinweises auf die Patenterteilung: **11.12.2024**
(21) Anmeldenummer: 21215316.7
(22) Anmeldetag: 16.12.2021
(51) Int. Cl.: F16H 57/08, F16H 57/023, F16H 57/04, F16H 55/06, F16H 57/00, F16D 1/10

(54) **PLANETENRAD FÜR EIN PLANETENGETRIEBE SOWIE PLANETENTRÄGER FÜR EIN SOLCHES PLANETENRAD**
PLANET GEAR FOR A PLANETARY GEAR TRANSMISSION AND PLANET CARRIER FOR SUCH A PLANET GEAR
PIGNON SATELLITE POUR UN TRAIN ÉPICYCLOÏDAL, AINSI QUE PORTE SATELLITES POUR UN TEL PIGNON SATELLITE

(43) Veröffentlichungstag der Anmeldung: 21.06.2023
(73) Patentinhaber: IMS Gear SE & Co. KGaA, 78166 Donaueschingen (DE)
(72) Erfinder: Süß, Marius, 78176 Blumberg (DE); Schwörer, Simon, 78086 Brigachtal (DE); Aberle, Steffen, 78126 Königsfeld (DE); Fechler, Jens, 78183 Hüfingen (DE)
(74) Vertreter: Westphal, Mussgnug & Partner Patentanwälte mbB

(56) Entgegenhaltungen:
- EP-A1- 3 306 140
- CN-A- 112 728 014
- DE-A1- 102015 219 455
- DE-A1- 102019 104 898
- US-A1- 2019 162 293
- US-B2- 8 597 156

## Beschreibung

Die vorliegende Erfindung betrifft ein Planetenrad für ein Planetengetriebe sowie einen Planetenträger für ein solches Planetenrad.

Planetengetriebe finden insbesondere dann Anwendung, wenn auf kleinem Raum hohe Über- oder Untersetzungen bereitgestellt werden müssen. Beispielsweise weisen moderne Fahrzeuge eine hohe Anzahl von Hilfsantrieben auf, beispielsweise Parkbremsaktuatoren, Heckklappenantriebe, Schiebedachantriebe oder Sitzlängsverstellungen. Als Drehmomentquelle werden nahezu ausschließlich Elektromotoren verwendet, die jedoch mit vergleichsweise hohen Drehzahlen und niedrigen Drehmomenten betrieben werden. In diesen Fällen stellen Planetengetriebe auf kleinem Raum die notwendigen Über- oder Untersetzungen bereit. Unter anderem aufgrund der Möglichkeit, hohe Stückzahlen zu geringen Kosten fertigen zu können und aufgrund einer geringen Geräuschentwicklung werden Planetengetriebe und insbesondere die Planentenräder aus Kunststoff gefertigt. Hierbei bietet sich die Fertigung im Spritzgussverfahren an, wobei die Randbedingungen, die beim Spritzgussverfahren beachtet werden müssen, zu Gestaltungen insbesondere des Planetenträgers führen, die von den klassischen Gestaltungen mehr oder weniger stark abweichen. Aus Kunststoff gefertigte Planetenträger und Planetenräder sind beispielsweise in der EP 3 722 641 A1, DE 10 2005 023 542 A1, der DE 10 2015 119 803 A1, der EP 3 527 846 A1, der EP 3 486 523 A1 und der WO 2014/095966 A1 bekannt.

Als weiterer Stand der Technik werden die Dokumente US 8 597 156 B2, EP 3 306 140 A1, DE 10 2019 104898 A1, US 2019/162293 A1, DE 10 2015 219455 A1 und CN 112 728 014 A genannt.

Aufgrund der Tatsache, dass sich derartige Planetengetriebe für die Massenfertigung eignen, stellt die schnelle und sichere Montierbarkeit derartiger Planetengetriebe einen wichtigen zusätzlichen Aspekt dar. Darüber hinaus werden die Planetengetriebe bei den oben genannten Anwendungen mitunter sehr stark belastet, so dass die Dauerfestigkeit insbesondere der Planetenräder einen weiteren wichtigen Aspekt darstellt, der zuweilen in einem Zielkonflikt mit einer Spritzguss-gerechten Fertigung steht.

Aufgabe der vorliegenden Erfindung ist es, ein Planetenrad und einen Planetenträger vorzuschlagen, mit welchen die oben beschriebenen Anforderungen erfüllt werden können und mit welchem es mit einfachen und kostengünstigen Mitteln möglich ist, ein Planetenrad und ein Planetenträger für ein Planetengetriebe zu schaffen, die so ausgestaltet sind, dass sich das Planetengetriebe einfach fertigen und montieren lässt und dabei eine hohe Dauerfestigkeit oder ein hohes maximal übertragbares Missbrauchsmoment aufweist.

Diese Aufgabe wird mit den in den Ansprüchen 1 und 10 angegebenen Merkmalen gelöst. Vorteilhafte Ausführungsformen sind Gegenstand der Unteransprüche.

Die Erfindung betrifft ein Planetenrad für ein Planetengetriebe, umfassend
- einen Radkörper mit einer ersten Planetenrad-Stirnfläche und einer zweiten Planetenrad-Stirnfläche,
- eine Planetenradachse, welche
   o eine Planetenrad-Drehachse des Planetenrads definiert und
   o einen ersten Lagerungsabschnitt und
   o einen zweiten Lagerungsabschnitt umfasst, wobei
- der erste Lagerungsabschnitt über die erste Planetenrad-Stirnfläche und der zweite Lagerungsabschnitt über die zweite Planetenrad-Stirnfläche übersteht,
- wobei zumindest eine koaxial oder parallel zur Planetenrad-Drehachse verlaufende Planetenradbohrung die Planetenradachse zumindest teilweise durchläuft.

Das vorschlagsgemäße Planetenrad weist einen ersten Lagerungsabschnitt und einen zweiten Lagerungsabschnitt, die außerhalb des eigentlichen Radkörpers angeordnet sind, und mit denen das Planetenrad in eine erste Lagerungsausnehmung bzw. in eine zweite Lagerungsausnehmung eines Planetenträgers eingebracht werden kann. Aufgrund der Tatsache, dass das Planetenrad eine koaxial zur Planetenrad-Drehachse verlaufende Planetenradbohrung aufweist, ist es möglich, einen Pin eines Montagewerkzeugs in diese Planetenradbohrung einzubringen und mit diesem Montagewerkzeug das Planetenrad in die erste Lagerungsausnehmung bzw. in die zweite Lagerungsausnehmung des Planetenträgers einzusetzen. Wie eingangs erwähnt, eignen sich die vorschlagsgemäßen Planetenräder und die vorschlagsgemäßen Planetenträger dazu, aus Kunststoff gefertigt zu werden. Hierbei ergibt sich allerdings die Situation, dass die funktionsrelevanten Oberflächen, insbesondere die Oberflächen des ersten Lagerungsabschnitts und des zweiten Lagerungsabschnitts sowie der Zähne der Verzahnung, vergleichsweise empfindlich sind gegenüber äußeren Einflüssen, so dass insbesondere bei der Montage eine Beschädigung der funktionsrelevanten Oberflächen nicht immer sicher ausgeschlossen werden kann. Die Oberflächen der Planetenradbohrung hingegen sind keine funktionsrelevanten Oberflächen. Für den Fall, dass sie beispielsweise dann beschädigt werden, wenn der Pin des Montagewerkzeugs in die Planetenradbohrung eingebracht wird, wird hierdurch die Funktionsfähigkeit des Planetenrads und folglich des Planetengetriebes nicht negativ beeinflusst. Insofern kann das Planetengetriebe mit den vorschlagsgemäßen Planetenrädern mit einem im Vergleich zu bekannten Fertigungsprozessen stabileren Fertigungsprozess und folglich mit einer geringen Ausschussmenge hergestellt werden.

Nach Maßgabe einer Ausführungsform kann das Planetenrad genau eine Planetenradbohrung aufweisen, welche das gesamte Planentenrad durchläuft. Um den oben bereits erwähnten Pin eines Montagewerkzeugs in die Planetenradbohrung einzubringen, ist es nicht unbedingt notwendig, dass die Planetenradbohrung das gesamte Planetenrad durchläuft. Allerdings ist die Fertigung einer Planetenradbohrung, welche das gesamte Planetenrad durchläuft, insbesondere aufgrund der Randbedingungen des Spritzgussverfahrens üblicherweise einfacher als eine Planetenradbohrung, welche nur teilweise in das Planetenrad hineinragt. Zudem wird die Elastizität des gesamten Planetenrads und insbesondere des ersten Lagerungsabschnitts und des zweiten Lagerungsabschnitts erhöht, was aus montagetechnischer Sicht insbesondere dann vorteilhaft ist, wenn die bereits erwähnten ersten Lagerungsausnehmungen und zweiten Lagerungsausnehmungen des Planetenträgers erste bzw. zweite Verrastungsvorsprünge aufweisen, die ihrerseits eine gewisse Elastizität aufweisen. Auf diesem Punkt wird später noch genauer eingegangen.

In einer weitergebildeten Ausführungsform kann
- der erste Lagerungsabschnitt ausgehend von der ersten Planetenrad-Stirnfläche eine erste Erstreckung und
- der zweite Lagerungsabschnitt ausgehend von der zweiten Planetenrad-Stirnfläche eine zweite Erstreckung aufweisen, wobei
- die erste Erstreckung ungleich der zweiten Erstreckung ist.

Wie erwähnt, werden der erste Lagerungsabschnitt und der zweite Lagerungsabschnitt in entsprechende erste Lagerungsausnehmungen bzw. zweite Lagerungsausnehmungen des Planetenträgers eingebracht. Wiederum insbesondere aufgrund von Vorgaben, die sich aus dem Spritzgussverfahren ergeben, kann es dabei notwendig sein, die erste Lagerungsausnehmung und die zweite Lagerungsausnehmung bezogen auf die Drehachse des Planetenträgers unterschiedlich lang auszugestalten, insbesondere dann, wenn ein separater Einleger mit dem Planetenträger verbunden werden soll. Mit den unterschiedlichen ersten Erstreckungen und zweiten Erstreckungen des ersten Lagerungsabschnitts bzw. zweiten Lagerungsabschnitts können die unterschiedlichen Erstreckungen berücksichtigt werden, so dass eine weitgehend maximierte Kontaktfläche bereitgestellt werden kann, die zu einer entsprechend geringeren Flächenpressung führt. Es kann sich dabei anbieten, die erste Lagerungsausnehmung und die zweite Lagerungsausnehmung mit unterschiedlichen Passungen zum Zusammenwirken mit dem ersten Lagerungsabschnitt bzw. mit dem zweiten Lagerungsabschnitt zu versehen, um die unterschiedlichen Kontaktflächen zu berücksichtigen.

Da in diesem Fall bei der Montage auf die korrekte Ausrichtung der Planetenräder geachtet werden muss, kann es sich anbieten, einen der Lagerungsabschnitte zusätzlich erkennbar zu markieren, beispielsweise mit einer Einkerbung.

An dieser Stelle sei angemerkt, dass es je nach Ausgestaltung des Planetenträgers und je nach zu erwartenden Belastungen im Betrieb auch möglich ist, die erste Erstreckung gleich der zweiten Erstreckung zu wählen. Aus fertigungstechnischer Sicht ergibt sich hierbei der Vorteil, dass die Planetenräder nicht in einer bestimmten Ausrichtung in den Planetenträger eingesetzt werden müssen.

Bei einer weitergebildeten Ausführungsform kann die Planetenradachse vom Radkörper gebildet werden. Es ist grundsätzlich möglich, beispielsweise eine Planetenradachse aus Stahl vorzusehen, auf welche das Planetenrad aufgesteckt wird. Ist es beispielsweise in der WO 2014/095966 A1 der Fall. In dieser Ausführungsform jedoch ist die Planetenradachse ein integraler Bestandteil des Radkörpers, so dass der Radkörper einteilig ausgestaltet ist. Hierdurch entfällt ein zusätzlicher Montageschritt. Zudem wird die Anzahl der Bauteile reduziert, wodurch die Lagerhaltung vereinfacht wird und die Kosten gering gehalten werden.

Erfindungsgemäß umfasst der Radkörper einen Zahnkranz mit einer ersten Anzahl von Zähnen und eine zweite Anzahl von Rippen, wobei die Rippen zwischen der Planetenradachse und dem Zahnkranz verlaufen, und auf den Rippen Planetenrad-Anlaufvorsprünge angeordnet sind, welche entlang der Planetenrad-Drehachse über den Zahnkranz überstehen. Die erste Anzahl von Zähnen kann dabei gleich der zweiten Anzahl von Rippen sein, was jedoch nicht unbedingt notwendig ist. Die Verwendung von Rippen hat unter anderem den Vorteil, dass diese dort angeordnet werden können, wo die Belastungen des Planetenrads am höchsten sind. Infolgedessen kann Material eingespart werden, ohne dass nennenswerte Nachteile an der Festigkeit des Planetenrads in Kauf genommen werden müssen. Das Vorsehen von Planetenrad-Anlaufvorsprüngen hat den Vorteil, dass Verschleißflächen geschaffen werden, ohne dass der dort auftretende Verschleiß einen nennenswerten negativen Einfluss auf die Funktionsfähigkeit des Planetenrads und folglich des Planetengetriebes hat. Die Anordnung der Planetenrad-Anlaufvorsprünge auf den Rippen ermöglicht es, diese in einem vergleichsweise geringen Abstand zur Drehachse des Planetenrads anzuordnen. Infolgedessen sinkt die Umfangsgeschwindigkeit der Planetenrad-Anlaufvorsprünge, so dass ihre Beanspruchung entsprechend gering gehalten wird. Das Vorsehen der Planetenrad-Anlaufvorsprünge auf den Rippen bietet sich insbesondere bei Geradverzahnungen an, bei welchem die wirkenden Axialkräfte im Vergleich zu Schrägverzahnungen geringer sind.

Eine erfindungsgemäße Alternative gibt vor, dass der Radkörper einen Zahnkranz mit einer ersten Anzahl von Zähnen und eine zweite Anzahl von Rippen umfassen kann, wobei der Radkörper zumindest einen durchgehenden Planetenrad-Anlaufvorsprung aufweist, der zwischen den Rippen und dem Zahnkranz angeordnet ist. Wiederum kann die erste Anzahl gleich der zweiten Anzahl sein oder sich voneinander unterscheiden. Aufgrund der Tatsache, dass die Planetenrad-Anlaufvorsprünge durchgehend und daher ununterbrochen ausgeführt sind, ergibt sich ein kontinuierlicher Kontakt mit den betreffenden Gegenflächen. Hierdurch lassen sich Fluchtungsfehler der Planetenrad-Drehachsen in Bezug auf den Planetenträger ausgleichen, ohne dass es zu einer spürbar erhöhten Geräuschentwicklung kommt. Das Vorsehen eines durchgehenden Planetenrad-Anlaufvorsprungs bietet sich insbesondere bei Schrägverzahnungen an, bei welchen hohe Axialkräfte auftreten.

Gemäß einer weiteren Ausführungsform weisen die Rippen eine konkave Wölbung mit einem Radius, der in einer durch die Planetenrad-Drehachse verlaufenden Ebene liegt, einem ersten Ende und einem zweiten Ende auf, wobei die Wölbung im Bereich des ersten Endes in den ersten Lagerungsabschnitt bzw. in den zweiten Lagerungsabschnitt übergeht, und im Bereich des zweiten Endes in die Planetenrad-Anlaufvorsprünge übergeht.

Das Vorsehen einer Wölbung sorgt für einen gleichmäßigen Spannungsverlauf, so dass Spannungsspitzen vermieden werden. Dabei kann der Radius der Wölbung konstant sein oder sich ändern. Die Änderung des Radius kann so gewählt werden, dass sich ein besonders gleichmäßiger Spannungsverlauf ergibt. Beispielsweise kann der Radius in einem Bereich, in welchem eine an der Wölbung anliegende Tangente senkrecht zur Drehachse verläuft, am kleinsten sein und zum radial inneren Ende und zum radial äußeren Ende hin zunehmen. Der günstige Spannungsverlauf vermindert die Ausbildung von Spannungsspitzen dort, wo im Betrieb das Planetenrad versagen könnte. Je nach Gestaltung der Wölbung kann diese auch mit einer Anzahl von ebenen Flächen, die entsprechend zueinander geneigt sind, angenähert werden. Die Neigung der Flächen zueinander ist im Außenbereich der Wölbung flacher und wird zum Zentrum hin steiler. Die obigen Ausführungen gelten für eine derartige Ausgestaltung jedoch gleichermaßen.

Bei einer weiteren Ausführungsform kann es sich anbieten, dass
- zwischen zwei benachbart angeordneten Zähnen der Zahnkranz einen Zahnfuß aufweist, und
- zumindest eine Rippe radial fluchtend mit einem der Zahnfüße angeordnet ist.

Es hat sich gezeigt, dass die Wahrscheinlichkeit, dass ein Zahn bricht, an den Zahnfüßen am höchsten ist. Die radial fluchtende Anordnung der Rippen zu den Zahnfüßen sorgt infolgedessen dafür, dass die Zahnfüße abgestützt werden. Die Wahrscheinlichkeit, dass das Zahnrad am Zahnfuß versagt, wird hierdurch deutlich verringert.

Nach Maßgabe einer weiteren Ausführungsform kann die erste Anzahl größer sein als die zweite Anzahl. Wie erwähnt, bezieht sich die erste Anzahl auf die Zähne und die zweite Anzahl auf die Rippen. In dieser Ausführungsform ist nicht an jedem Zahnfuß eine Rippe fluchtend angeordnet. Vielmehr weisen einige Zahnfüße keine Rippen auf. Dies hat zur Folge, dass der Abstand zwischen zwei benachbarten Rippen in Umfangsrichtung im Vergleich zu zwei benachbart angeordneten Zähnen vergrößert wird. Die zwischen zwei benachbarten Rippen sich ausbildenden Taschen sind daher im Vergleich zu einer Ausgestaltung, bei welcher die erste Anzahl und die zweite Anzahl gleich sind, größer. Hieraus ergeben sich Spritzguss-technische Vorteile dahingehend, dass enge Radien und Materialanhäufungen vermieden oder zumindest gering gehalten werden. Diese können zu Überhitzungen in der Fertigung des Planetenrads führen, welche eine Lunkerbildung hervorrufen können. Diese Lunkerbildung kann zwar korrigiert werden, was aber zu einem längeren und komplizierteren Fertigungsprozess führt. Da Materialanhäufungen in dieser Ausführungsform vermieden werden können, lassen sich die Planetenräder schneller und kostengünstiger fertigen.

In einer weitergebildeten Ausführungsform kann die erste Anzahl um einen ganzzahligen Faktor größer sein als die zweite Anzahl. Dieser ganzzahlige Faktor ist insbesondere 2. Allerdings ist es auch möglich, als ganzzahligen Faktor beispielsweise 3 oder 4 oder größer zu wählen. Entsprechend groß kann die Tasche gewählt werden, welche zwischen zwei benachbart angeordneten Rippen entsteht. Der ganzzahlige Faktor kann sich insbesondere am Durchmesser des Planetenrads orientieren, wobei ein größerer ganzzahliger Faktor bei kleineren Durchmessern zur Anwendung kommen kann.

Bei einer weitergebildeten Ausführungsform können die Rippen
- eine erste Rippengruppe mit ersten Rippen und eine zweiten Rippengruppe mit zweiten Rippen bilden, und
- die ersten Rippen der ersten Planetenrad-Stirnfläche und die zweiten Rippen auf der zweiten Planetenrad-Stirnfläche angeordnet sind, wobei
- die ersten Rippen um einen Drehwinkel, der in einer senkrecht zur Planetenrad-Drehachse verlaufenden Ebene liegt, gedreht zu den zweiten Rippen angeordnet sind.

Beispielsweise für den Fall, dass der ganzzahlige Faktor 2 beträgt, ist es möglich, den Drehwinkel so zu wählen, dass er demjenigen Winkel entspricht, die zwei benachbart angeordnete Zähnen mit der Planetenradachse einschließen. Folglich wird auf der ersten Planetenrad-Stirnfläche beispielsweise jeder Zahnfuß mit einer ungeraden laufenden Nummer und auf der zweiten Planetenrad-Stirnfläche jeder Zahnfuß mit einer geraden laufenden Nummer von einer ersten Rippe bzw. einer zweiten Rippe abgestützt. Infolgedessen ist jeder Zahnfuß auf einer Planetenrad-Stirnfläche abgestützt, so dass eine gleichmäßige Abstützung der Zahnfüße erreicht wird. Die Wahrscheinlichkeit, dass die Zähne an den Zahnfüßen brechen, wird hierdurch gering gehalten.

Ferner betrifft die Erfindung einen Planetenträger für ein Planetenrad nach einem der vorherigen Ausführungsformen, umfassend einen Trägerkörper, der
- sich entlang einer Planetenträger-Drehachse erstreckt,
- einen ersten scheibenförmigen Körper und
- einen zweiten scheibenförmigen Körper umfasst, wobei
- der erste scheibenförmige Körper und der zweite scheibenförmige Körper mit zumindest einem Verbindungskörper miteinander verbunden sind,
- der erste scheibenförmige Körper eine erste Lagerungsausnehmung aufweist,
   o in welche der erste Lagerungsabschnitt des Planetenrads einbringbar ist, und
   o die zumindest einen sich in Umfangsrichtung erstreckenden ersten Verrastungsvorsprung aufweist, und
- der zweite scheibenförmige Körper eine zweite Lagerungsausnehmung aufweist,
   o in welche der zweite Lagerungsabschnitt des Planetenrads einbringbar ist, und
   o die zumindest einen sich in Umfangsrichtung erstreckenden zweiten Verrastungsvorsprung aufweist.

Wie eingangs erwähnt, können die Planetenräder mit einer Planetenradbohrung versehen werden, wodurch die Planetenräder insbesondere im ersten Lagerungsabschnitt und im zweiten Lagerungsabschnitt mit einer erhöhten Elastizität ausgestattet werden. Wie ebenfalls erwähnt, werden die Planetenräder mit ihren ersten Lagerungsabschnitten und mit ihren zweiten Lagerungsabschnitten bei der Montage des Planetengetriebes in die ersten Lagerungsausnehmungen bzw. die zweiten Lagerungsausnehmungen des Planetenträgers eingebracht. Die ersten und die zweiten Verrastungsvorsprüngen werden dabei kurzzeitig elastisch komprimiert und kehren anschließend wieder in ihren ursprünglichen Zustand zurück. Dabei werden jedoch nicht nur die ersten und die zweiten Verrastungsvorsprüngen elastisch verformt, sondern auch die ersten und die zweiten Lagerungsabschnitte. Die Verformungen werden folglich auf die ersten und zweiten Verrastungsvorsprünge als auch auf die ersten und zweiten Lagerungsabschnitte verteilt. Hierdurch wird die Wahrscheinlichkeit einer irreversiblen plastischen Verformung insbesondere der Verrastungsvorsprünge reduziert oder eine plastische Verformung verhindert.

Aufgrund dieser bei der Montage stattfindenden Prozesse wird eine Rast-, Schnapp- oder Klipsverbindung bereitgestellt, die sich durch eine besonders einfache und schnelle Montage auszeichnet.

Mit den ersten und den zweiten Verrastungsvorsprüngen werden der erste Lagerungsabschnitt bzw. der zweite Lagerungsabschnitt radial nach außen gesehen umschlungen, wodurch eine radial nach außen wirkende Hinterschneidung bereitgestellt wird. Das in die Lagerungsausnehmungen eingesetzte Planetenrad wird hierdurch vorfixiert und kann sich nicht vom Planetenträger lösen, auch wenn der Planententräger zusammen mit den Planetenrädern noch nicht in ein Hohlrad eingesetzt ist. Zudem bewirkt die Vorfixierung einen stabileren Betrieb des Planetengetriebes. Die erste Lagerungsausnehmung und die zweite Lagerungsausnehmung umfassen annäherungsweise kreisringsektorförmige Abschnitte, mit denen die Planetenräder beim Einbringen geführt und zentriert werden. Infolgedessen schließen die Flächen der kreisringsektorförmigen Abschnitte einen Ausnehmungswinkel ein. Um die Reibung und folglich den Verschleiß zu minimieren, welcher infolge dieses Kontakts entsteht, die Planetengetriebe üblicherweise mit Öl oder Fett geschmiert. Die Verrastungsvorsprünge bewirken dabei im Betrieb einen Saugeffekt, der dazu führt, dass das Öl in die Lagerungsausnehmungen hineingesaugt wird. Mit der Wahl des Ausnehmungswinkels kann der Saugeffekt verstärkt oder vermindert werden. Infolgedessen wird das Einlaufverhalten der Planetenräder in das Sonnenrad und das Hohlrad verbessert, wodurch sich der Verschleiß des Planetengetriebes verringern lässt. Zudem wird die Geräuschentwicklung gering gehalten.

Der erfindungsgemäße Planetenträger ist derart ausgebildet, dass
- auf dem ersten scheibenförmigen Körper zumindest eine die erste Lagerungsausnehmung umschließende erste axiale Gegenanlauffläche und/oder
- auf dem zweiten scheibenförmigen Körper zumindest eine die zweite Lagerungsausnehmung umschließende zweite axiale Gegenanlauffläche vorgesehen ist, wobei
- die erste axiale Gegenanlauffläche und/oder die zweite axiale Gegenanlauffläche mit den Planetenrad-Anlaufvorsprüngen zusammenwirkt, wenn das Planetenrad in die erste Lagerungsausnehmung und die zweite Lagerungsausnehmung eingebracht ist, wobei
- sich der ersten axialen Gegenanlauffläche zur ersten Lagerungsausnehmung hin eine erste Schrägfläche anschließt, die gegenüber der ersten axialen Gegenanlauffläche mit einem ersten Schrägflächenwinkel geneigt ist und/oder
- sich der zweiten axialen Gegenanlauffläche zur zweiten Lagerungsausnehmung hin eine zweite Schrägfläche anschließen, die gegenüber der zweiten Gegenanlauffläche mit einem zweiten Schrägflächenwinkel geneigt ist.

Wie erwähnt, weisen die Planetenräder Planetenrad-Anlaufvorsprünge auf. Im Betrieb kommen die Planetenrad-Anlaufvorsprüngen mit den ersten axialen Gegenanlaufflächen bzw. zweiten axialen Gegenanlaufflächen des Planetenträgers in Kontakt, wodurch Axialkräfte, die auf die Planetenräder wirken, auf den Planetenträger übertragen und von diesem aufgenommen werden. Um die Reibung und folglich den Verschleiß zu minimieren, welcher infolge dieses Kontakts entsteht, werden, wie bereits erwähnt, die Planetengetriebe üblicherweise mit Öl oder Fett geschmiert. Die erste Schrägfläche und/oder die zweite Schrägfläche bewirken dabei einen Saugeffekt, der in Verbindung mit der Drehbewegung des Planetenrads relativ zum Planetenträger das Öl oder das Fett zwischen die Planetenrad-Anlaufvorsprüngen und die erste axiale Gegenanlauffläche oder die zweite axialen Gegenanlauffläche saugt. Hierdurch wird sichergestellt, dass eine ausreichende Menge von Öl oder Fett vorhanden ist, um die oben beschriebene Reibung und den hiermit verbundenen Verschleiß gering zu halten.

Je nach Neigung der ersten Schrägfläche und/oder der zweiten Schrägfläche fällt der Saugeffekt stärker oder schwächer aus.

Gemäß einer fortgebildeten Ausbildung geht die erste axiale Gegenanlauffläche mit einer konvexen ersten Schrägflächenwölbung in die erste Schrägfläche und die zweite axiale Gegenanlauffläche mit einer konvexen zweiten Schrägflächenwölbung in die zweite Schrägfläche über. Zusammen mit den jeweiligen Schrägflächen bewirken die Schrägflächenwölbungen eine Verstärkung des oben beschriebenen Saugeffekts.

Nach Maßgabe einer fortentwickelten Ausbildung kann der Trägerkörper
- zumindest einen radial äußeren Verbindungskörper,
- zumindest einen radial inneren Verbindungskörper sowie
- zumindest einen zwischen dem radial äußeren Verbindungskörper und dem radial inneren Verbindungskörper angeordneten weiteren Verbindungskörper aufweisen, wobei
- der radial äußere Verbindungskörper, der radial innere Verbindungskörper und der weitere Verbindungskörper den ersten scheibenförmigen Körper mit dem zweiten scheibenförmigen Körper verbinden.

Sämtliche Verbindungskörper stellen eine Verbindung zwischen dem ersten scheibenförmigen Körper und dem zweiten scheibenförmigen Körper her. Bezugnehmend auf den in der WO 2014/0095966 A1 gezeigten Planetenträger fällt auf, dass dort der erste scheibenförmige Körper und der zweite scheibenförmige Körper nur mit insgesamt vier am äußeren Umfang der scheibenförmigen Körper angeordneten Verbindungskörpern miteinander verbunden sind. Im Gegensatz dazu sind der radial innere Verbindungskörper, der radial äußere Verbindungskörper sowie der weitere Verbindungskörper deutlich gleichmäßiger über den gesamten Planetenträger verteilt. Hierdurch wird ein entsprechend gleichmäßiger Kraftfluss zwischen dem ersten scheibenförmigen Körper und dem zweiten scheibenförmigen Körper erreicht, der insgesamt zu einer erhöhten Stabilität des Trägerkörpers führt. Da eine erhöhte Stabilität auch zu geringeren Verformungen im Betrieb des Planetengetriebes führt, bewirkt eine erhöhte Stabilität auch einen geringeren Verschleiß.

Bei einer weiteren Ausbildung kann vorgesehen sein, dass der weitere Verbindungskörper mit dem radial äußeren Verbindungskörper und dem radial inneren Verbindungskörper verbunden ist. In dieser Ausbildung wird ein geschlossener Kraftverlauf zwischen dem radial äußeren Verbindungskörper und dem radial inneren Verbindungskörper dadurch bewirkt, dass der weitere Verbindungskörper sowohl mit dem radial äußeren Verbindungskörper als auch mit dem radial inneren Verbindungskörper verbunden ist. Auch hierdurch wird die Stabilität des Trägerkörpers mit den oben genannten technischen Effekten erhöht.

Eine fortentwickelte Ausbildung kann vorgeben, dass der radial äußere Verbindungskörper und der zumindest eine weitere Verbindungskörper eine geschlossene Ausnehmung des zweiten scheibenförmigen Körpers umschließen. Dadurch, dass eine geschlossene Ausnehmung vom radial äußeren Verbindungskörper und zumindest von einem weiteren Verbindungskörper gebildet wird, kann Material für den zweiten scheibenförmigen Körper eingespart werden, ohne dass hierdurch die Festigkeit in nennenswertem Umfang negativ beeinflusst wird.

Gemäß einer weiteren Ausbildung geht zumindest einer der weiteren Verbindungskörper mit einer konkaven ersten Wölbung in die erste axiale Gegenanlauffläche über. Beispielsweise bei dem in der WO 2014/0095966 A1 gezeigten Planetenträger stoßen die erste axiale Gegenanlauffläche und der weitere Verbindungskörper direkt aufeinander und bilden zumindest theoretisch eine Kante. Zumindest ist keine Wölbung vorgesehen, mit welcher die erste axiale Gegenanlauffläche in den weiteren Verbindungskörper übergehen. Im Gegensatz dazu bewirkt die konkave erste Wölbung, dass Spannungsspitzen im Übergang von der ersten Gegenanlauffläche in den weiteren Verbindungskörper vermieden oder zumindest reduziert werden. Entsprechend kann auch der Übergang zumindest von einem weiteren Verbindungskörper in die zweite axiale Gegenanlauffläche ausgestaltet sein, wobei hier eine konkave zweite Wölbung vorgesehen sein kann.

Nach einer fortgebildeten Ausbildung weist die konkave erste Wölbung einen Radius sowie ein erstes Ende und ein zweites Ende, wobei die erste Wölbung im Bereich des ersten Endes in die erste axiale Gegenanlauffläche und im Bereich des zweiten Endes in den weiteren Verbindungskörper übergeht, wobei der Radius ausgehend vom ersten Ende und vom zweiten Ende abnimmt. Hierdurch wird ein besonders günstiger Spannungsverlauf zwischen dem weiteren Verbindungskörper und dem ersten scheibenförmigen Körper geschaffen. Der günstige Spannungsverlauf vermeidet die Ausbildung von Spannungsspitzen, wo im Betrieb der Trägerkörper versagen könnte. Je nach Gestaltung der Wölbung kann diese auch mit einer Anzahl von ebenen Flächen, die entsprechend zueinander geneigt sind, angenähert werden. Die Neigung der Flächen zueinander ist im Außenbereich der Wölbung flacher und wird zum Zentrum hin steiler. Die obigen Ausführungen gelten für eine derartige Ausgestaltung jedoch gleichermaßen.

Zudem kann zumindest einer der weiteren Verbindungskörper mit einer konkaven zweiten Wölbung in die zweite axiale Gegenanlauffläche übergehen, wobei sich der Radius der zweiten Wölbung entsprechend wie der Radius der ersten Wölbung ändert. Nach Maßgabe einer fortentwickelten Ausbildung kann der erste scheibenförmige Körper eine erste freie Planetenträger-Stirnfläche bilden, auf welcher eine Anzahl von Versteifungsrippen angeordnet ist. Das Drehmoment wird in dieser Ausbildung über den ersten scheibenförmigen Körper in den Planetenträger eingeleitet oder aus dem Planententräger abgeführt. Folglich ist der erste scheibenförmige Körper im Vergleich zum zweiten scheibenförmigen Körper deutlich höher belastet. Diese Belastung wird mit den Versteifungsrippen abgefangen.

Eine fortentwickelte Ausbildung kann vorgeben, dass die erste Lagerungsausnehmung eine erste Erstreckung entlang der Planetenträger-Drehachse und die zweite Lagerungsausnehmung eine zweite Erstreckung entlang der Planetenträger-Drehachse aufweist, wobei die erste Erstreckung größer ist als die zweite Erstreckung.

Wie erwähnt, dient der Einleger zum Einleiten eines Drehmoments in den Trägerkörper und insbesondere in den ersten scheibenförmigen Körper oder zum Abführen eines Drehmoments aus dem Trägerkörper und insbesondere aus dem ersten scheibenförmigen Körper. Um das Drehmoment zwischen dem Einleger und dem Trägerkörper sicher übertragen zu können, ist es daher notwendig, den ersten scheibenförmigen Körper mit einer ausreichenden Wandstärke zu versehen. Dies wird dadurch erreicht, dass die erste Erstreckung größer ist als die zweite Erstreckung. Es ist nicht notwendig, auch den zweiten scheibenförmigen Körper mit einer erhöhten Wandstärke zu versehen. Hierdurch werden die Abmessungen des Trägerkörpers und infolgedessen der Materialverbrauch nicht unnötig erhöht.

Nach Maßgabe einer fortentwickelten Ausbildung kann der Planetenträger mehrere erste Lagerungsausnehmungen und mehrere zweite Lagerungsausnehmungen aufweisen, und auf dem ersten scheibenförmigen Körper kann eine Anzahl von Planetenträger-Anlaufvorsprüngen vorgesehen sein, die benachbart zu den ersten Lagerungsausnehmungen angeordnet sind. Das vorliegende Planetengetriebe ist hauptsächlich für den Einsatz von Geradverzahnungen vorgesehen, wobei Schrägverzahnungen bis zu einem bestimmten Schrägungswinkel auch in Betracht gezogen werden können. Für den Fall, dass eine Geradverzahnung eingesetzt wird, sind die wirkenden axialen Kräfte theoretisch 0 oder sehr gering, jedoch in der Praxis beispielsweise aufgrund von Verzahnungsfehlern innerhalb der Toleranzen sind die wirkenden axialen Kräfte so hoch, dass diese berücksichtigt werden müssen. Die Planetenträger-Anlaufvorsprünge bilden Verschleißflächen, wenn der Planetenträger mit benachbart angeordneten Bauteilen in Kontakt tritt. Der an den Planetenträger-Anlaufvorsprüngen entstehende Verschleiß wirkt sich nicht oder zumindest zu einem vernachlässigenden Umfang auf die Funktionsfähigkeit des Planetengetriebes aus. Wie erwähnt, werden die höchsten Kräfte oder höchsten Drehmomente im Bereich der Lagerungsausnehmungen und insbesondere im Bereich der Verrastungsvorsprüngen zwischen dem Trägerkörper und den Planetenrädern übertragen. Wie ebenfalls erwähnt, gehen die Versteifungrippen aus diesem Grund von den Lagerungsausnehmungen und insbesondere vom Bereich der Verrastungsvorsprüngen aus. Diese Tatsache wird dazu genutzt, auf die Kräfte, die über die Planetenträger-Anlaufvorsprüngen in den Trägerkörper des Planetenträgers eingetragen werden, entsprechend aufzunehmen. Im Vergleich zu einer Anordnung der Planetenträger-Anlaufvorsprüngen in etwa mittig zwischen zwei benachbart angeordneten Lagerungsausnehmungen werden die wirkenden Biegemomente in Bezug auf die Lagerungsausnehmungen gering gehalten, wodurch die Belastung des Trägerkörpers insgesamt gering gehalten wird. Nach Maßgabe einer fortentwickelten Ausbildung kann ein Einleger des Planetenträgers mit dem ersten scheibenförmigen Körper verbunden sein und der Einleger einen Befestigungskörper umfassen, mit welchem der Einleger mit dem Trägerkörper verbunden ist, wobei der Befestigungskörper eine radial nach außen weisende Verbindungsfläche aufweist, welche zumindest eine radiale Erweiterung und eine Verbindungsverzahnung bildet.

Um die bereits mehrfach erwähnten Drehmomente zwischen dem Trägerkörper und dem Einleger sicher übertragen zu können, ist der Verbindungskörper des Einlegers mit einer Verbindungsverzahnung versehen. Mit der Verbindungsverzahnung kann eine große Kontaktfläche zwischen dem Einleger und dem Trägerkörper bereitgestellt werden, wodurch die Flächenpressung entsprechend gering gehalten wird. Mit der radialen Erweiterung kann diese Kontaktfläche weiter erhöht und die Flächenpressung weiter verringert werden. Darüber hinaus bewirkt die radiale Erweiterung abschnittsweise eine gewisse Exzentrizität, welche sich positiv auf die Drehmomentübertragung auswirkt. Dabei kann die radiale Erweiterung dem Einleger eine Form nach Art einer Hypotrochoide geben. Die Verbindungsverzahnung kann dabei möglichst viele kleine Zähne bei einem großen Zahnkopfradius aufweisen. Auch hierdurch werden Spannungsspitzen vermieden oder gering gehalten.

Beispielhafte Ausführungsformen der Erfindung werden im Folgenden unter Bezugnahme auf die beigefügten Zeichnungen näher erläutert. Es zeigen
- Figur 1: eine perspektivische Darstellung eines erfindungsgemäßen Planetenrads,
- Figur 2: eine Draufsicht auf das in Figur 1 dargestellte Planetenrad,
- Figur 3: eine Vorderansicht des in Figur 1 dargestellten Planetenrads,
- Figur 4: eine Schnittdarstellung entlang der in Figur 3 definierten Schnittebene C-C,
- Figur 5: eine Vorderansicht auf einen erfindungsgemäßen Planetenträger mit drei in den Figuren 1 bis 4 dargestellten Planetenrädern,
- Figur 6: eine Hinteransicht auf den in Figur 5 erfindungsgemäßen Planetenträger,
- Figur 7: eine Draufsicht auf den in Figur 5 dargestellten Planetenträger,
- Figur 8: eine Draufsicht auf den in Figur 5 dargestellten Planetenträger ohne die Planentenräder,
- Figur 9: eine Schnittdarstellung entlang der in Figur 8 definierten Schnittebene A-A,
- Figur 10: eine Schnittdarstellung entlang der in Figur 8 definierten Schnittebene B-B,
- Figur 11: eine perspektivische Darstellung des in Figur 5 dargestellten Planetenträgers, wobei man auf einen zweiten scheibenförmigen Körper blickt,
- Figur 12: eine vergrößerte Darstellung des in Figur 11 definierten Ausschnitts X,
- Figur 13: eine perspektivische Darstellung des in Figur 5 dargestellten Planetenträgers, wobei man auf einen ersten scheibenförmigen Körper blickt,
- Figur 14: eine vergrößerte Darstellung des in Figur 13 definierten Ausschnitts Y,
- Figur 15: eine prinzipielle vergrößerte Darstellung des in Figur 14 gekennzeichneten Radius,
- Figur 16: eine perspektivische Darstellung eines Einlegers, und
- Figur 17: eine Vorderansicht des in Figur 16 dargestellten Einlegers.

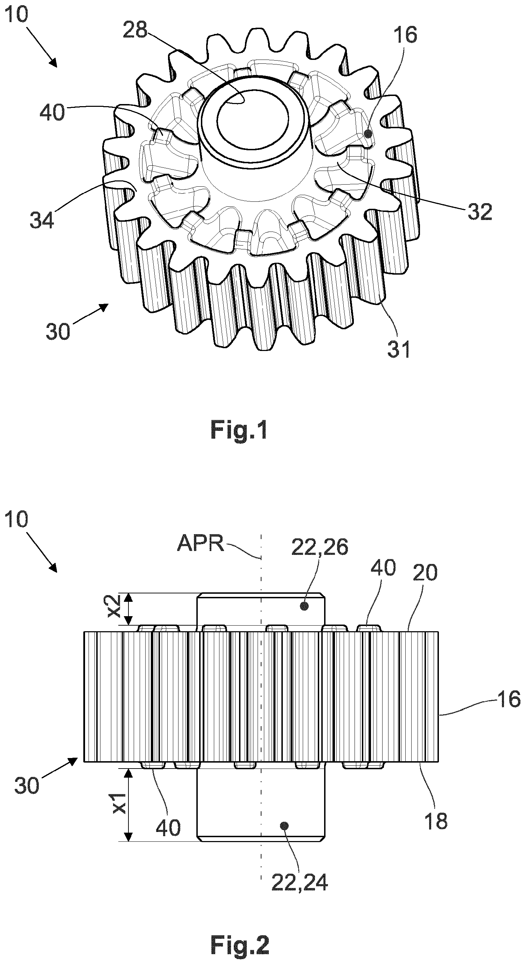

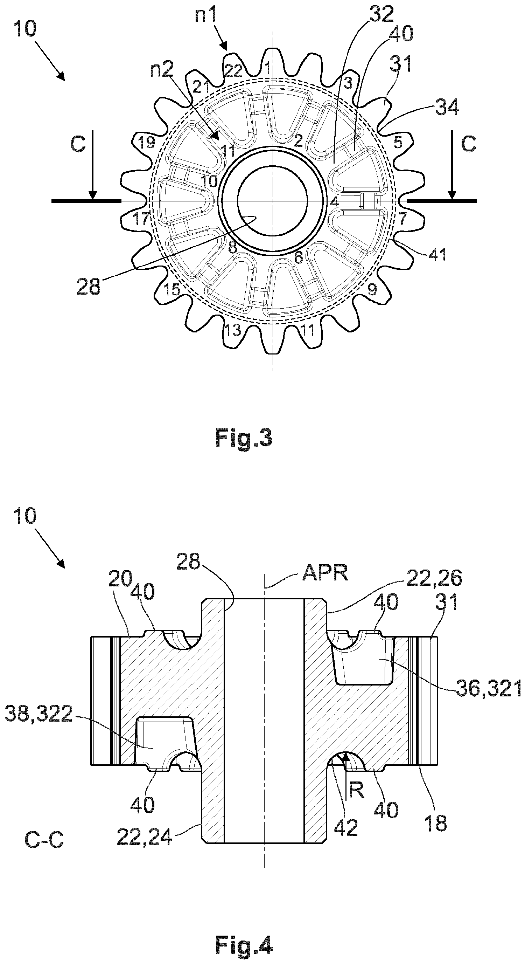

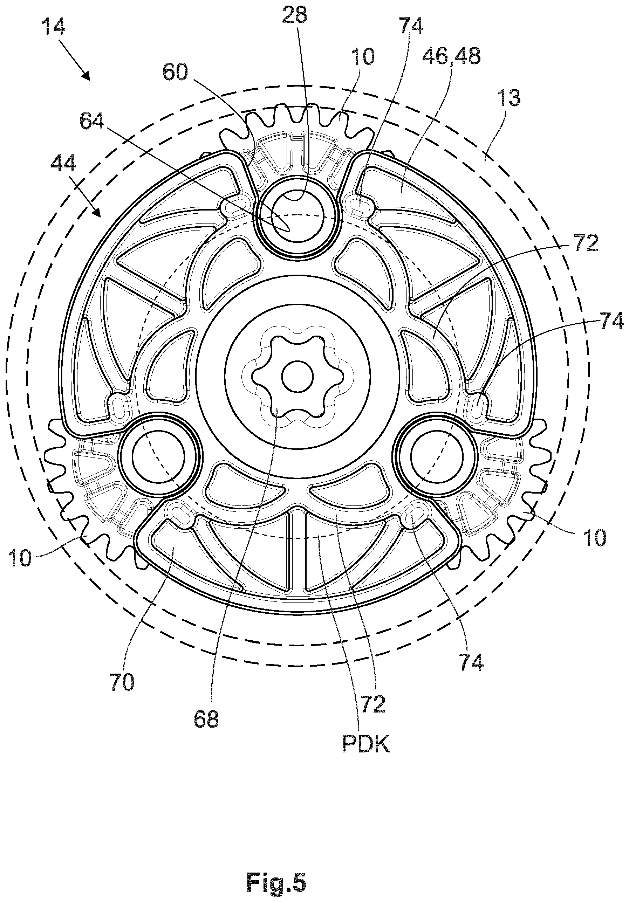

Figur 1 zeigt eine perspektivische Darstellung eines erfindungsgemäßen Planentenrads 10, Figur 2 eine Draufsicht auf das in Figur 1 dargestellte Planetenrad 10, Figur 3 eine Vorderansicht und Figur 4 eine Schnittdarstellung des Planetenrads 10. Sofern nicht anders erwähnt, beziehen sich die folgenden Ausführungen auf die Figuren 1 bis 4. Dieses Planetenrad 10 kann in ein Planetenträger 44, welcher unter anderem in Figur 5 dargestellt ist, eingesetzt werden und dort zusammen mit einem dort nur prinzipiell dargestellten Hohlrad 13 ein Planetengetriebe 14 bilden.

Das Planetenrad 10 weist einen Radkörper 16 auf, der eine erste Planentenrad-Stirnfläche 18 und eine zweite Planetenrad-Stirnfläche 20 bildet. Zudem umfasst das Planentenrad 10 eine Planetenradachse 22, die im dargestellten Ausführungsbeispiel vom Radkörper 16 gebildet wird. Insofern ist die Planetenradachse 22 ein integraler Bestandteil des Planetenrads 10. Die Planetenradachse 22 definiert eine Planetenrad-Drehachse APR (Figur 4), um welche sich das Planetenrad 10 im Betrieb des Planetengetriebes 14 dreht. Ferner bildet die Planetenradachse 22 einen ersten Lagerungsabschnitt 24 und einen zweiten Lagerungsabschnitt 26, die insbesondere in Figur 2 erkennbar sind. Mit dem ersten Lagerungsabschnitt 24 und dem zweiten Lagerungsabschnitt 26 kann das Planetenrad 10 drehbar im Planetenträger 44 gelagert werden, worauf später noch genauer eingegangen wird.

Wie aus der Figur 2 zu erkennen ist, weist der erste Lagerungsabschnitt 24 eine erste Erstreckung x1 entlang der Planetenrad-Drehachse APR und der zweite Lagerungsabschnitt 26 eine zweite Erstreckung x2, ebenfalls entlang der Planetenrad-Drehachse APR auf, wobei die erste Erstreckung x1 größer ist als die zweite Erstreckung x2.

Wie insbesondere aus der Figur 4 hervorgeht, ist das Planentenrad 10 mit einer koaxial zur Planetenrad-Drehachse APR verlaufenden Planetenradbohrung 28 versehen, welche das Planetenrad 10 vollständig durchläuft. Auf die genaue Funktion der Planetenradbohrung 28 wird im Folgenden noch genauer eingegangen. An dieser Stelle soll darauf hingewiesen werden, dass es für die Funktion der Planetenradbohrung 28 nicht unbedingt notwendig ist, dass diese koaxial zur Planetenrad-Drehachse APR verläuft. Zudem muss sie nicht zwangsläufig einen kreisförmigen Querschnitt aufweisen. Auch das Verhältnis der ersten Erstreckung x1 zur zweiten Erstreckung x2 hat keinen nennenswerten Einfluss auf die Funktionsfähigkeit der Planetenradbohrung 28.

Das Planetenrad 10 bildet einen Zahnkranz 30 mit einer ersten Anzahl n1 von Zähnen 31, wobei im dargestellten Ausführungsbeispiel die erste Anzahl n1 von Zähnen 31 zweiundzwanzig (22) beträgt, wie insbesondere aus der Figur 3 zu entnehmen ist. Darüber hinaus ist das Planetenrad 10 mit einer zweiten Anzahl n2 von Rippen 32 versehen, welche zwischen dem Zahnkranz 30 und der Planetenradachse 22 in radialer Richtung verlaufen. Aus der Figur 3 ist zu erkennen, dass die zweite Anzahl n2 von Rippen 32 elf (11) beträgt und damit kleiner ist als die erste Anzahl n1. Der Zahnkranz 30 bildet zwischen zwei benachbart angeordneten Zähnen 31 jeweils einen Zahnfuß 34, wobei eine Rippe 32 radial fluchtend mit einem dieser Zahnfüße 34 angeordnet ist, was sich insbesondere aus den Figuren 1 und 3 herleiten lässt.

Wie erwähnt, ist die zweite Anzahl n2 der Rippen 32 halb so groß wie die erste Anzahl n1 der Zähne 31. Dies hat zur Folge, dass nicht jeder Zahnfuß 34, sondern nur jeder zweite Zahnfuß 34 radial einwärts mit einer radial fluchtenden Rippe 32 versehen ist. Die Rippen 32, welche auf der ersten Planetenrad-Stirnfläche 18 angeordnet sind, lassen sich einer ersten Rippengruppe 36 zuordnen, wobei die Rippen 32 der ersten Rippengruppe 36 als erste Rippen 321 bezeichnet werden sollen. Entsprechend lässt sich eine zweite Rippengruppe 38 definieren, deren Rippen 32 als zweite Rippen 322 bezeichnet werden. Aus der Figur 4 lässt sich entnehmen, dass die ersten Rippen 321 um einen Drehwinkel, der in einer senkrecht zur Planetenradachse 22 verlaufenden Ebene liegt, gedreht zu den zweiten Rippen 322 angeordnet sind. Dieser Drehwinkel entspricht dem Winkel, welche zwei benachbart angeordnete Zähne 31 in der zuvor definierten Ebene einschließen. Hierdurch wird erreicht, dass jeder Zahnfuß 34 entweder auf der ersten Planetenrad-Stirnfläche 18 oder der zweiten Planetenrad-Stirnfläche 20 mit einer ersten Rippe 321 bzw. einer zweiten Rippe 322 abgestützt ist.

Auf den Rippen 32 ist jeweils ein Planetenrad-Anlaufvorsprung 40 angeordnet, der entlang der Planetenrad-Drehachse APR über den Zahnkranz 30 übersteht (siehe insbesondere Figur 2). Aus der Figur 4 lässt sich entnehmen, dass sich radial einwärts der Planetenrad-Anlaufvorsprünge 40 eine konkave Wölbung 42 anschließt. In Figur 4 weist die Wölbung 42 einen konstanten Radius R auf, wobei dieser Radius R sich auch ändern kann, um einen möglichst gleichmäßigen Spannungsverlauf bereitzustellen und um Spannungsspitzen zu vermeiden oder zumindest zu reduzieren. Folglich kann der Radius R so gewählt sein, dass die Spannungen im Bereich der Wölbung 42 unter den zu erwartenden Belastungen im Betrieb kleiner sind als im Zahnkranz 30.

In Figur 3 ist zusätzlich noch ein durchgehender Planetenrad-Anlaufvorsprung 41 mit gestrichelten Linien dargestellt, welcher alternativ oder kumulativ zu den Planetenrad-Anlaufvorsprüngen 40 vorgesehen sein kann. Der durchgehende Planentenrad-Anlaufvorsprung 41 ist radial außerhalb der Planetenrad-Anlaufvorsprünge 40 zwischen den Rippen 32 und dem Zahnkranz 30 angeordnet.

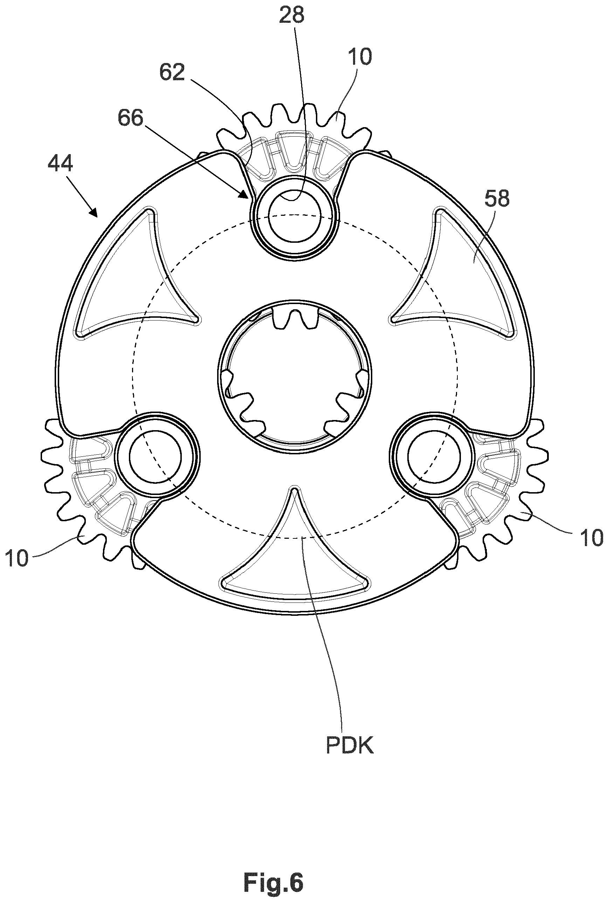

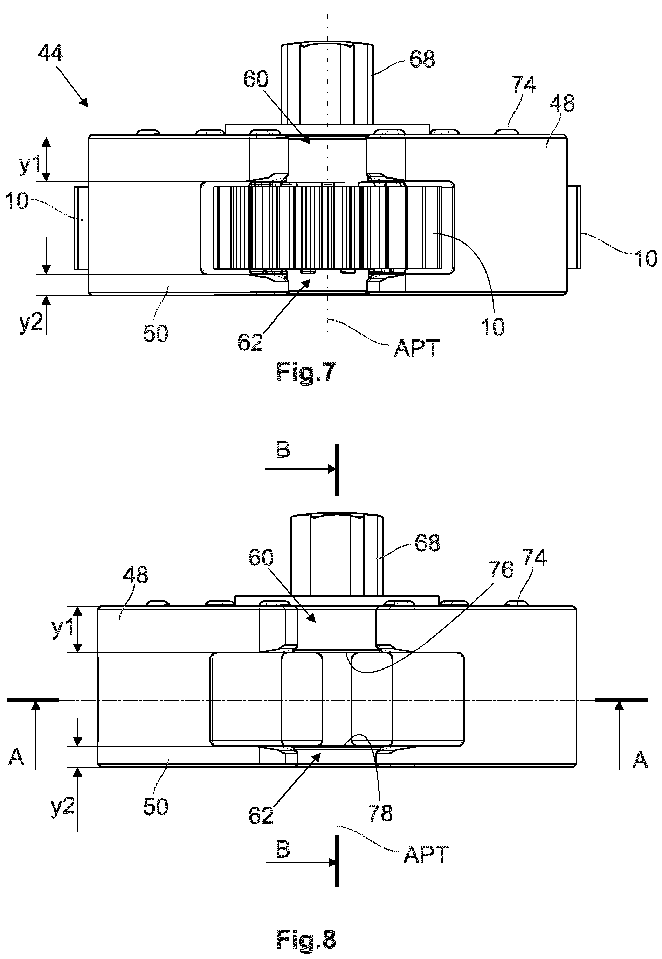

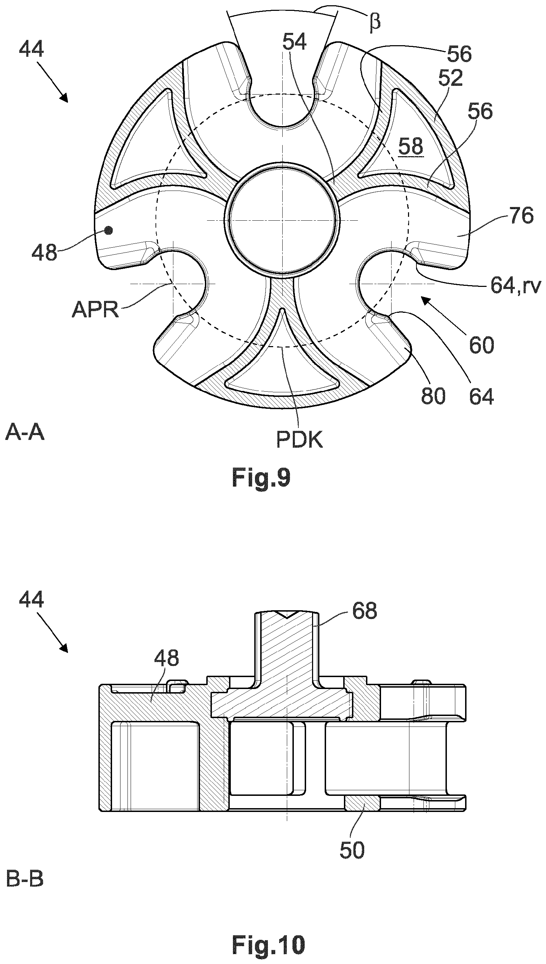

In den Figuren 5 bis 14 ist ein Planetenträger 44 gemäß der vorliegenden Erfindung anhand von verschiedenen Ansichten dargestellt. Soweit nicht anders beschrieben, bezieht sich die folgende Beschreibung auf die Figuren 5 bis 14. Der Planetenträger 44 umfasst einen Trägerkörper 46, der sich entlang einer Planetenträger-Drehachse APT erstreckt, die am besten in den Figuren 7 und 8 zu erkennen ist. Der Trägerkörper 46 umfasst einen ersten scheibenförmigen Körper 48 und einen zweiten scheibenförmigen Körper 50, wobei man in der Figur 5 auf den ersten scheibenförmigen Körper 48 und in Figur 6 auf den zweiten scheibenförmigen Körper 50 schaut. Der erste scheibenförmige Körper 48 und der zweite scheibenförmige Körper 50 sind mit einer Anzahl von radial äußeren Verbindungskörpern 52, eine Anzahl von radial inneren Verbindungskörpern 54 sowie eine Anzahl von dazwischen angeordneten weiteren Verbindungskörpern 56 miteinander verbunden. Bezugnehmend auf die Figur 9 lässt sich erkennen, dass insgesamt drei radial äußere Verbindungskörper 52 vorgesehen sind, welche ringförmig aufgebaut sind. Entsprechend sind drei radial innere Verbindungskörper 54 vorhanden, wobei die in Umfangsrichtung äußeren Enden der radial äußeren Verbindungskörper 52 der Ausgangspunkt jeweils eines weiteren Verbindungskörpers 56 sind, welche sich im radial inneren Verbindungskörper vereinigen. Während der radial äußere Verbindungskörper 52 konvex gewölbt ist, sind die beiden weiteren Verbindungskörper 56 konkav gewölbt. Aufgrund dieser Ausgestaltung umschließen der radial äußere Verbindungskörper 52 und die beiden weiteren Verbindungskörper 56 eine Ausnehmung 58 des zweiten scheibenförmigen Körpers 50, die sich insbesondere in Figur 6 betrachten lässt.

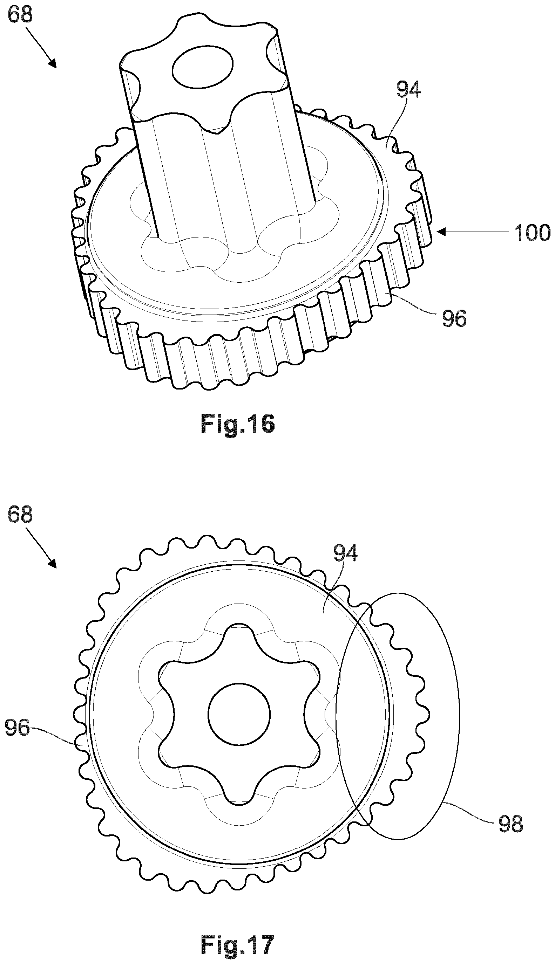

In den Figuren 5 bis 7 ist der Planetenträger 44 in einem Zustand dargestellt, in welchem drei Planetenräder 10, wie sie in den Figuren 1 bis 4 gestellt sind, mit dem Planetenträger 44 drehbar verbunden sind. Hierzu weist der erste scheibenförmige Körper 48 insgesamt drei erste Lagerungsausnehmungen 60 und der zweite scheibenförmige Körper 50 insgesamt 3 zweite Lagerungsausnehmungen 62 auf. Die ersten Lagerungsausnehmungen 60 sind mit ersten Verrastungsvorsprüngen 64 und die zweiten Lagerungsausnehmungen 62 mit zweiten Verrastungsvorsprüngen 66 versehen. Wie insbesondere aus den Figuren 7 und 8 erkennbar, weist die erste Lagerungsausnehmung 60 eine erste Erstreckung y1 und die zweite Lagerungsausnehmung 62 eine zweite Erstreckung y2 entlang der Planetenträger-Drehachse APT auf, wobei die erste Erstreckung y1 größer ist als die zweite Erstreckung y2. Aus den Figuren 7 und 8 ist ebenfalls erkennbar, dass ein Einleger 68, der in den Figuren 16 und 17 separat gezeigt ist, mit dem ersten scheibenförmigen Körper 48 verbunden ist, wobei der Einleger 68 beispielsweise umspritzt wird. Dabei ist die erste Erstreckung y1 so gewählt, dass der Einleger 68 möglichst vollumfänglich in den ersten scheibenförmigen Körper 48 integriert werden kann. Der Einleger 68 dient dazu, ein Drehmoment in den Planetenträger 44 einzubringen oder aus dem Planetenträger 44 abzuführen.

Bei der Montage des Planetengetriebes 14 wird wie folgt vorgegangen: Ein Pin eines nicht gezeigten Montagewerkzeugs wird in die Planetenradbohrung 28 eingebracht und anschließend das Planetenrad 10 mit einer radial nach innen gerichteten Bewegung in eine der ersten Lagerungsausnehmungen 60 und eine der zweiten Lagerungsausnehmungen 62 eingebracht. Beim Einbringen verformen sich sowohl der erste Lagerungsabschnitt 24 und der zweite Lagerungsabschnitt 26 des Planetenrads 10 als auch die ersten Verrastungsvorsprünge 64 und die zweiten Verrastungsvorsprünge 66 elastisch. Sobald der erste Lagerungsabschnitt 24 vollständig in die erste Lagerungsausnehmung 60 und der zweite Lagerungsabschnitt 26 vollständig in die zweite Lagerungsausnehmung 62 eingebracht sind, wird die elastische Verformung wieder aufgehoben. Die ersten Verrastungsvorsprünge 64 und die zweiten Verrastungsvorsprünge 66 bilden dabei eine radial nach außen wirkende Hinterschneidung in Bezug auf den ersten Lagerungsabschnitt 24 und den zweiten Lagerungsabschnitt 26 des Planetenrads 10 und ragen in Umfangsrichtung in die Lagerungsausnehmungen hinein. Infolgedessen wird eine gewisse Vorfixierung der Planetenräder 10, so dass sie auch dann nicht vom Planetenträger 44 lösen können, wenn dieser noch nicht in das Hohlrad 13 eingebracht ist. Zudem wird die Kontaktfläche zwischen den Lagerungsabschnitten 24, 26 und den Lagerungsausnehmungen 60, 62 vergrößert, so dass der Verschleiß gleichmäßiger verteilt wird.

Die von den Verrastungsvorsprüngen 64, 66 gebildete Hinterschneidung bewirkt zudem einen Saugeffekt des Schmiermittels in die Lagerungsausnehmungen 60, 62 im Betrieb des Planetengetriebes 14. Insbesondere bezugnehmend auf die Figur 9 ist erkennbar, das die Lagerungsausnehmungen 60, 62 einen kreisförmigen Abschnitt und einen kreisringsekorförmigen Abschnitt umfassen, die in den Verrastungsvorsprüngen 64, 66 ineinander übergehen. Die kreisringsektorförmigen Abschnitte schließen dabei einen Ausnehmungswinkel β ein. Mit einer Variation dieses Ausnehmungswinkels β kann der Saugeffekt verstärkt oder verringert werden.

Wie erwähnt, gehen die kreisringsektorförmigen Abschnitte im Bereich der Verrastungsvorsprünge 64, 66 in die kreisförmigen Abschnitte über. Dabei ist vorgesehen, dass der kreisringsektorförmige Abschnitt mit einem Übergangsradius rv in den kreisförmigen Abschnitt übergeht. Auch mit dem Übergangsradius rv kann der Saugeffekt beeinflusst werden.

In Figur 5 schaut man auf eine erste freie Planetenträger-Stirnfläche 70, auf welche eine Anzahl von Versteifungsrippen 72 angeordnet ist. In den Figuren 5, 6 und 9 ist ein Planetenrad-Drehachsenkreis PDK mit gestrichelten Linien eingezeichnet. Der Planetenrad-Drehachsenkreis PDK geht dabei durch die Planetenrad-Drehachsen APR, wenn die Planetenräder 10 in den Planententräger 44 eingesetzt sind (siehe insbesondere Figur 9). Verlängert man die Versteifungsrippen 72 gedanklich, gehen sie von den Planetenrad-Drehachsen APR aus, wenn diese in den Planetenträger 44 eingesetzt sind. Im dargestellten Ausführungsbeispiel verlaufen die Versteifungsrippen 72 etwas radial einwärts beidseitig der ersten Verrastungsvorsprüngen 64 von den ersten Lagerungsausnehmungen 60 und radial nach innen zum Einleger 68 hin, derart, dass sie am radial inneren Ende in etwa tangential zum Zahnkopf der Verzahnung des Einlegers 68 verlaufen.

Darüber hinaus sind auf der ersten freien Planetenträger-Stirnfläche 70 insgesamt sechs Planetenträger-Anlaufvorsprüngen 74 benachbart zu den ersten Verrastungsvorsprüngen 64 angeordnet.

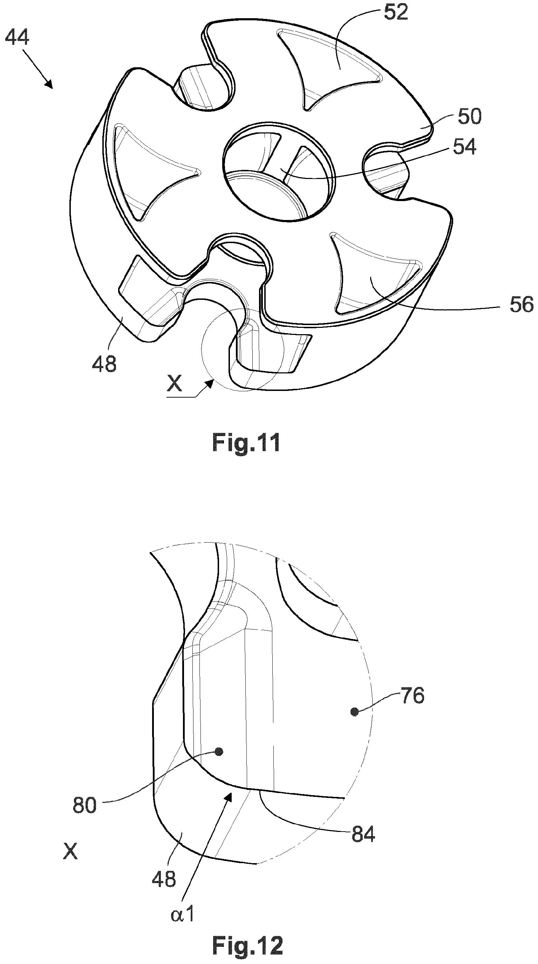

Wie insbesondere aus den Figuren 11, 13 und 14 erkennbar ist, bildet der erste scheibenförmige Körper 48 eine erste axiale Gegenanlauffläche 76, welche die erste Lagerungsausnehmung 60 umschließt. Entsprechend bildet der zweite scheibenförmige Körper 50 eine zweite axiale Gegenanlauffläche 78, welche die zweite Lagerungsausnehmung 62 umschließt. Im Betrieb wirken die Planetenrad-Anlaufvorsprünge 40 mit der ersten Gegenanlauffläche 76 oder der zweiten Gegenanlauffläche 78 zusammen. Dabei schließt sich eine erste Schrägfläche 80 zur ersten Lagerungsausnehmung 60 hin der ersten Gegenanlauffläche 76 an, welche mit einem ersten Schrägflächenwinkel α1 gegenüber ersten Gegenanlauffläche 76 geneigt ist. Die erste Schrägfläche 80 geht dabei mit einer konvexen ersten Schrägflächenwölbung 84 in die erste axiale Gegenanlauffläche 76 über. Entsprechend schließt sich eine zweite Schrägfläche 82 zur zweiten Lagerungsausnehmung 62 hin an, wobei die zweite Schrägfläche 82 mit einem zweiten Schrägflächenwinkel α2 gegenüber der zweiten Gegenanlauffläche 78 geneigt ist. Die zweite Schrägfläche 82 geht mit einer zweiten Schrägflächenwölbung 86 in die zweite axiale Gegenanlauffläche 78 über.

Die erste Schrägfläche 80 und die zweite Schrägfläche 82 bewirken zusammen mit der Drehung des Planetenrads 10 einen Saugeffekt, mit welchem Öl oder Fett, mit dem das Planetengetriebe 14 geschmiert ist, zwischen die Planetenrad-Anlaufvorsprüngen 40 und die erste axiale Gegenanlauffläche 76 bzw. die zweite axiale Gegenanlauffläche 78 gesaugt wird. Je nach Neigung der ersten Schrägfläche 80 und der zweiten Schrägfläche 82 ist der Saugeffekt größer oder kleiner. Darüber hinaus können gewisse Fluchtungsfehler der Planetenrad-Drehachsen APR gegenüber der Planetenträger-Drehachse APR oder Verformungen aufgrund des eingeleiteten Drehmoments ausgeglichen werden, ohne dass es zu einer erhöhten Geräuschentwicklung oder zu einem erhöhten Verschleiß kommt.

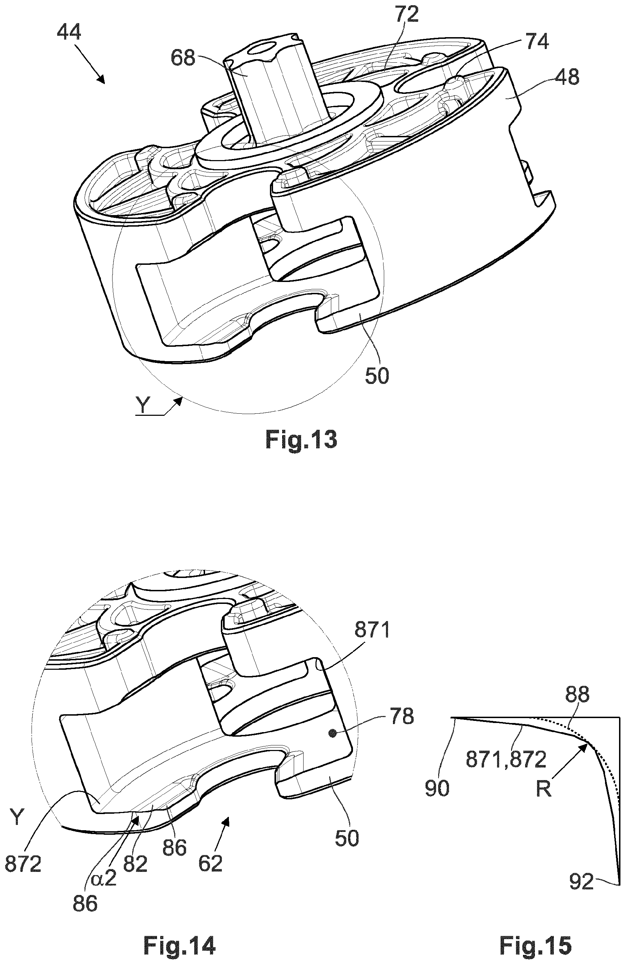

In der Figur 11 blickt man auf die erste axiale Gegenanlauffläche 76 und erkennt einen Übergang der ersten axialen Gegenanlauffläche 76 zu einem weiteren Verbindungskörper 56, wobei eine erste Wölbung 871 gebildet wird. In der Figur 14 blickt man auf die zweite axiale Gegenanlauffläche 78 und einen der weiteren Verbindungskörper 56. Man erkennt, dass der weitere Verbindungskörper 56 mit einer zweiten Wölbung 872 in die zweite axiale Gegenanlauffläche 78 übergeht. Die erste Wölbung 871 und die zweite Wölbung 872 sind schematisch in Figur 15 dargestellt. Die erste Wölbung 871 bzw. die zweite Wölbung 872 weisen dabei einen sich ändernden Radius R auf. Im Vergleich dazu ist in Figur 15 auch eine Vergleichswölbung 88 mit einer gestrichelten Linie dargestellt, welche einen konstanten Radius R aufweist. Die erste Wölbung 871 und die zweite Wölbung 872 weisen ein erstes Ende 90 und ein zweites Ende 92 auf. Der Radius R der ersten Wölbung 871 und der zweiten Wölbung 872 nimmt ausgehend vom ersten Ende 90 und vom zweiten Ende 92 zur Mitte hin ab, so dass dort, wo in Figur 15 sich die erste Wölbung 871 bzw. die zweite Wölbung 872 und die Vergleichswölbung 88 berühren, die Wölbung den geringsten Radius R aufweist. Aufgrund dieser Gestaltung der ersten Wölbung 871 bzw. der zweiten Wölbung 872 wird ein besonders gleichmäßiger Spannungsverlauf bereitgestellt.

In den Figuren 16 und 17 ist der bereits erwähnte Einleger 68 separat dargestellt. Der Einleger 68 umfasst dabei einen Befestigungskörper 94, mit welchem der Einleger 68 mit dem Trägerkörper 46 verbunden werden kann. Der Befestigungskörper 94 weist eine radial nach außen weisende Verbindungsfläche 96 auf, die eine Verbindungsverzahnung 100 bildet. Ferner bildet die Verbindungsfläche 96 drei radiale Erweiterungen 98, so dass die Verbindungsverzahnung 100 abschnittsweise eine gewisse Exzentrizität aufweist. Die drei radialen Erweiterungen 98 verleihen dem Befestigungskörper 94 eine Form nach Art einer Hypertrochoide. Die Anzahl der exzentrischen Erweiterungen 98 entspricht dabei der Anzahl der Planetenräder 10 des Planetengetriebes 14, wobei der maximale Radius einer exzentrischen Erweiterung 98 zwischen zwei benachbart angeordneten Planetenrädern 10 angeordnet ist. Die Anzahl und die Ausprägung der exzentrischen Erweiterungen 98 können so gewählt werden, dass die wirkenden Spannungen gering gehalten werden. Unter der Ausprägung der exzentrischen Erweiterungen 98 sind unter anderem deren Größe und geometrische Form zu verstehen. Wie erwähnt, basieren die radialen Erweiterungen 98 auf einer Hypotrochoide. Mit der entsprechenden Wahl der betreffenden Parameter können die radialen Erweiterungen 98 so gestaltet werden, dass sich die Form des Befestigungskörpers 94 der eines Polygons, hier ein Dreieck, oder eines Kreises annähert. Wie erwähnt, wird der Einleger 68 im Bereich des Befestigungskörpers 94 vom ersten scheibenförmigen Körper 48 umschlossen. Der Verlauf der Versteifungsrippen 72 ist dabei so gewählt, dass ein möglichst großer Teil der Kräfte in etwa tangential in den Einleger 68 und insbesondere in die in den radialen Erweiterungen 98 angeordneten Zahnköpfen eingeleitet werden. Infolgedessen kann ein Drehmoment zwischen dem Einleger 68 und dem Planetenträger 44 übertragen werden.

### Bezugszeichenliste

- 10: Planetenrad
- 13: Hohlrad
- 14: Planetengetriebe
- 16: Radkörper
- 18: erste Planetenrad-Stirnfläche
- 20: zweite Planetenrad-Stirnfläche
- 22: Planetenradachse
- 24: erster Lagerungsabschnitt
- 26: zweiter Lagerungsabschnitt
- 28: Planetenradbohrung
- 30: Zahnkranz
- 31: Zähne
- 32: Rippen
- 321: erste Rippen
- 322: zweite Rippen
- 34: Zahnfuß
- 36: erste Rippengruppe
- 38: zweite Rippengruppe
- 40: Planetenrad-Anlaufvorsprung
- 42: Wölbung
- 44: Planetenträger
- 46: Trägerkörper
- 48: erster scheibenförmiger Körper
- 50: zweiter scheibenförmiger Körper
- 52: radial äußerer Verbindungskörper
- 54: radial innerer Verbindungskörper
- 56: weiterer Verbindungskörper
- 58: Ausnehmung
- 60: erste Lagerungsausnehmung
- 62: zweite Lagerungsausnehmung
- 64: erster Verrastungsvorsprung
- 66: zweiter Verrastungsvorsprung
- 68: Einleger
- 70: erste freie Planetenträger-Stirnfläche
- 72: Versteifungsrippe
- 74: Planetenträger-Anlaufvorsprung
- 76: erste axiale Gegenanlauffläche
- 78: zweite axiale Gegenanlauffläche
- 80: erste Schrägfläche
- 82: zweite Schrägfläche
- 84: erste Schrägflächenwölbung
- 86: zweite Schrägflächenwölbung
- 871: erste Wölbung
- 872: zweite Wölbung
- 88: Vergleichswölbung
- 90: erstes Ende
- 92: zweites Ende
- 94: Befestigungskörper
- 96: Verbindungsfläche
- 98: radiale Erweiterung
- 100: Verbindungsverzahnung

- APR: Planetenrad-Drehachse
- APT: Planetenträger-Drehachse
- n1: erste Anzahl
- n2: zweite Anzahl
- R: Radius
- x1: erste Erstreckung
- x2: zweite Erstreckung
- y1: erste Erstreckung
- y2: zweite Erstreckung

- α1: erster Schrägflächenwinkel
- α2: zweiter Schrägflächenwinkel

- β: Ausnehmungswinkel

## Patentansprüche

1. Planetenrad (10) für ein Planetengetriebe, umfassend
- einen Radkörper (16) mit einer ersten Planetenrad-Stirnfläche (18) und einer zweiten Planetenrad-Stirnfläche (20),
- eine Planetenradachse (22), welche
o eine Planetenrad-Drehachse (APR) des Planetenrads (10) definiert und
o einen ersten Lagerungsabschnitt (24) und
o einen zweiten Lagerungsabschnitt (26)umfasst, wobei
o der erste Lagerungsabschnitt (24) über die erste Planetenrad-Stirnfläche (18) und der zweite Lagerungsabschnitt (26) über die zweite Planetenrad-Stirnfläche (20) übersteht,
- wobei zumindest eine koaxial oder parallel zur Planetenrad-Drehachse (APR) verlaufende Planetenradbohrung (28) die Planetenradachse (22) zumindest teilweise durchläuft,
**dadurch gekennzeichnet, dass** der Radkörper (16)
- einen Zahnkranz (30) mit einer ersten Anzahl (n1) von Zähnen (31) und
- eine zweite Anzahl (n2) von Rippen (32) umfasst, wobei
- die Rippen (32) zwischen der Planetenradachse (22) und dem Zahnkranz (30) verlaufen,
wobei auf den Rippen (32) Planetenrad-Anlaufvorsprünge (40) angeordnet sind, welche entlang der Planetenrad-Drehachse (APR) über den Zahnkranz (30) überstehen, oder
wobei - der Radkörper (16) zumindest einen durchgehenden Planetenrad-Anlaufvorsprung (41) aufweist, der zwischen den Rippen (32) und dem Zahnkranz (30) angeordnet ist.

2. Planetenrad (10) nach Anspruch 1,
**dadurch gekennzeichnet, dass** das Planetenrad (10) genau eine Planetenradbohrung (28) aufweist, welche das gesamte Planentenrad (10) durchläuft.

3. Planetenrad (10) nach einem der Ansprüche 1 oder 2,
**dadurch gekennzeichnet, dass**
- der erste Lagerungsabschnitt (24) ausgehend von der ersten Planetenrad-Stirnfläche (18) eine erste Erstreckung (x1) und
- der zweite Lagerungsabschnitt (26) ausgehend von der zweiten Planetenrad-Stirnfläche (20) eine zweite Erstreckung (x2) aufweist, wobei
- die erste Erstreckung (x1) ungleich der zweiten Erstreckung (x2) ist.

4. Planetenrad (10) nach einem der vorherigen Ansprüche,
**dadurch gekennzeichnet, dass** die Planetenradachse (22) vom Radkörper (16) gebildet wird.

5. Planetenrad (10) nach einem der vorhergehenden Ansprüche, **dadurch gekennzeichnet, dass**
- die Rippen (32) eine konkave Wölbung (42) mit
o einem Radius (R), der in einer durch die Planetenrad-Drehachse (APR) verlaufenden Ebene liegt,
o einem ersten Ende (90) und einem zweiten Ende (92) aufweisen, und
- die Wölbung (42)
o im Bereich des ersten Endes (90) in den ersten Lagerungsabschnitt (24) bzw. in den zweiten Lagerungsabschnitt (26) übergeht, und
im Bereich des zweiten Endes (92) in die Planetenrad-Anlaufvorsprünge (40) übergeht.

6. Planetenrad (10) nach einem der vorhergehenden Ansprüche, **dadurch gekennzeichnet, dass**
- zwischen zwei benachbart angeordneten Zähnen (31) der Zahnkranz (30) einen Zahnfuß (34) aufweist, und
- zumindest eine Rippe (32) radial fluchtend mit einem der Zahnfüße (34) angeordnet ist.

7. Planetenrad (10) nach einem der vorhergehenden Ansprüche, **dadurch gekennzeichnet, dass** die erste Anzahl (n1) größer ist als die zweite Anzahl (n2).

8. Planetenrad (10) nach Anspruch 7,
**dadurch gekennzeichnet, dass** die erste Anzahl (n1) um einen ganzzahligen Faktor größer ist als die zweite Anzahl (n2).

9. Planetenrad (10) nach einem der vorhergehenden Ansprüche, **dadurch gekennzeichnet, dass** die Rippen (32)
- eine erste Rippengruppe (36) mit ersten Rippen (321) und eine zweiten Rippengruppe (38) mit zweiten Rippen (322) bilden, wobei
- die ersten Rippen (321) der ersten Planetenrad-Stirnfläche (18) und die zweiten Rippen (322) auf der zweiten Planetenrad-Stirnfläche (20) angeordnet sind, wobei
- die ersten Rippen (321) um einen Drehwinkel, der in einer senkrecht zur Planetenrad-Drehachse (APR) verlaufenden Ebene liegt, gedreht zu den zweiten Rippen (322) angeordnet sind.

10. Planetenträger (44) für ein Planetenrad (10) nach einem der vorherigen Ansprüche, umfassend einen Trägerkörper (46), der
- sich entlang einer Planetenträger-Drehachse (APT) erstreckt,
- einen ersten scheibenförmigen Körper (48) und
- einen zweiten scheibenförmigen Körper (50) umfasst, wobei
- der erste scheibenförmige Körper (48) und der zweite scheibenförmige Körper (50) mit zumindest einem Verbindungskörper (52, 54, 56) miteinander verbunden sind,
- der erste scheibenförmige Körper (48) eine erste Lagerungsausnehmung (60) aufweist,
o in welche der erste Lagerungsabschnitt (24) des Planetenrads (10) einbringbar ist, und
o die zumindest einen sich in Umfangsrichtung erstreckenden ersten Verrastungsvorsprung (64) aufweist, und
- der zweite scheibenförmige Körper (50) eine zweite Lagerungsausnehmung (62) aufweist,
o in welche der zweite Lagerungsabschnitt (26) des Planetenrads (10) einbringbar ist, und
o die zumindest einen sich in Umfangsrichtung erstreckenden zweiten Verrastungsvorsprung (66) aufweist,
**dadurch gekennzeichnet, dass**
- auf dem ersten scheibenförmigen Körper (48) zumindest eine die erste Lagerungsausnehmung (60) umschließende erste axiale Gegenanlauffläche (76) und/oder
- auf dem zweiten scheibenförmigen Körper (50) zumindest eine die zweite Lagerungsausnehmung (62) umschließende zweite axiale Gegenanlauffläche (78) vorgesehen ist, wobei
- die erste axiale Gegenanlauffläche (76) und/oder die zweite axiale Gegenanlauffläche (78) mit den Planetenrad-Anlaufvorsprüngen (40) zusammenwirkt, wenn das Planetenrad (10) in die erste Lagerungsausnehmung (60) und die zweite Lagerungsausnehmung (62) eingebracht ist, wobei
- sich der ersten axialen Gegenanlauffläche (76) zur ersten Lagerungsausnehmung (60) hin eine erste Schrägfläche (80) anschließt, die gegenüber der ersten axialen Gegenanlauffläche (76) mit einem ersten Schrägflächenwinkel (α1) geneigt ist und/oder
- sich der zweiten axialen Gegenanlauffläche (78) zur zweiten Lagerungsausnehmung (62) hin eine zweite Schrägfläche (82) anschließt, die gegenüber der zweiten axialen Gegenanlauffläche (76) mit einem zweiten Schrägflächenwinkel (α2) geneigt ist.

11. Planetenträger (44) nach Anspruch 10,
**dadurch gekennzeichnet, dass**
- die erste axiale Gegenanlauffläche (76) mit einer konvexen ersten Schrägflächenwölbung in die erste Schrägfläche (80) und/oder
- die zweite axiale Gegenanlauffläche (78) mit einer konvexen zweiten Schrägflächenwölbung in die zweite Schrägfläche (82) übergehen.

12. Planetenträger (44) nach einem der Ansprüche 10 bis 11, **dadurch gekennzeichnet, dass** der Trägerkörper (46)
- zumindest einen radial äußeren Verbindungskörper (52),
- zumindest einen radial inneren Verbindungskörper (54) sowie
- zumindest einen zwischen dem radial äußeren Verbindungskörper (52) und dem radial inneren Verbindungskörper (54) angeordneten weiteren Verbindungskörper (56) aufweist, wobei
- der radial äußere Verbindungskörper (52), der radial innere Verbindungskörper (54) und der weitere Verbindungskörper (56) den ersten scheibenförmigen Körper (48) mit dem zweiten scheibenförmigen Körper (50) verbinden.

13. Planetenträger (44) nach Anspruch 12,
**dadurch gekennzeichnet, dass** der weitere Verbindungskörper (56) mit dem radial äußeren Verbindungskörper (52) und dem radial inneren Verbindungskörper (54) verbunden ist.

14. Planetenträger (44) nach einem der Ansprüche 12 oder 13,
**dadurch gekennzeichnet, dass** der radial äußere Verbindungskörper (52) und der zumindest eine weitere Verbindungskörper (56) eine geschlossene Ausnehmung (58) des zweiten scheibenförmigen Körpers (50) umschließen.

15. Planetenträger (44) nach einem der Ansprüche 12 bis 14,
**dadurch gekennzeichnet, dass**
- zumindest einer der weiteren Verbindungskörper (56) mit einer konkaven ersten Wölbung (871) in die erste axiale Gegenanlauffläche (76) übergeht.

16. Planententräger (44) nach Anspruch 15,
**dadurch gekennzeichnet, dass**
- die konkave erste Wölbung (871)
o einen Radius (R) sowie
o ein erstes Ende (90) und ein zweites Ende (92) aufweist, und
- die erste Wölbung (871) im Bereich des ersten Endes (90) in die erste axiale Gegenanlauffläche (76) und im Bereich des zweiten Endes (92) in den weiteren Verbindungskörper (56) übergeht, wobei
- der Radius (R) ausgehend vom ersten Ende (90) und vom zweiten Ende (92) abnimmt.

17. Planetenträger (44) nach einem der Ansprüche 10 bis 16, **dadurch gekennzeichnet, dass** der erste scheibenförmige Körper (48) eine erste freie Planetenträger-Stirnfläche (70) bildet, auf welcher eine Anzahl von Versteifungsrippen (72) angeordnet ist.

18. Planetenträger (44) nach einem der Ansprüche 10 bis 17, **dadurch gekennzeichnet, dass**
- die erste Lagerungsausnehmung (60) eine erste Erstreckung (y1) entlang der Planetenträger-Drehachse (APT) und
- die zweite Lagerungsausnehmung (62) eine zweite Erstreckung (y2) entlang der Planetenträger-Drehachse (APT) aufweist, wobei
- die erste Erstreckung (y1) größer ist als die zweite Erstreckung (y2).

19. Planetenträger (44) nach einem der Ansprüche 10 bis 18, **dadurch gekennzeichnet, dass** der Planetenträger mehrere erste Lagerungsausnehmungen und mehrere zweite Lagerungsausnehmungen aufweist, wobei auf dem ersten scheibenförmigen Körper (48) eine Anzahl von Planetenträger-Anlaufvorsprüngen (74) vorgesehen sind, die benachbart zu den ersten Lagerungsausnehmungen (60) angeordnet sind.

20. Planetenträger (44) nach einem der Ansprüche 10 bis 19, **dadurch gekennzeichnet, dass**
- ein Einleger (68) des Planetenträgers (44) mit dem ersten scheibenförmigen Körper verbunden ist und der Einleger (68)
- einen Befestigungskörper (94) umfasst, mit welchem der Einleger (68) mit dem Trägerkörper (46) verbunden ist, wobei
- der Befestigungskörper (94) eine radial nach außen weisende Verbindungsfläche (96) aufweist, welche
o zumindest eine radiale Erweiterung (98) und
o eine Verbindungsverzahnung (100) bildet.

## Claims

1. Planetary gear (10) for a planetary transmission, comprising
- a gearwheel body (16) having a first planetary gear end face (18) and a second planetary gear end face (20),
- a planetary gear axle (22) which
o defines a planetary gear axis of rotation (APR) of the planetary gear (10) and
o comprises a first mounting section (24) and
o a second mounting section (26), wherein
o the first mounting section (24) extends over the first planetary gear end face (18) and the second mounting section (26) extends over the second planetary gear end face (20),
- wherein at least one planetary gear bore hole (28), which extends coaxially or parallel to the planetary gear axis of rotation (APR), extends at least partially through the planetary gear axle (22),
**characterized in that** the gearwheel body (16) comprises
- a gear rim (30) having a first plurality (n1) of teeth (31) and
- a second plurality (n2) of ribs (32), wherein
- the ribs (32) extend between the planetary gear axle (22) and the gear rim (30), wherein
- planetary gear abutment protrusions (40) are arranged on the ribs (32) which extend over the gear rim (30) along the planetary gear axis of rotation (APR), or wherein
- the gearwheel body (16) comprises at least one continuous planetary gear abutment protrusion (41) which is arranged between the ribs (32) and the gear rim (30).

2. Planetary gear (10) in accordance with claim 1,
**characterized in that** the planetary gear (10) comprises exactly one planetary gear bore hole which extend through the entire planetary gear (10).

3. Planetary gear (10) in accordance with claim 1 or 2,
**characterized in that**
- the first mounting section (24) comprises, beginning from the first planetary gear end face (18), a first extension (x1) and **in that**
- the second mounting section (26) comprises, beginning from the second planetary gear end face (20), a second extension (x2), wherein
- the first extension (x1) is not equal to the second extension (x2).

4. Planetary gear (10) in accordance with any of the preceding claims,
**characterized in that** the planetary gear axle (22) is formed by the gearwheel body (16).

5. Planetary gear (10) in accordance with any of the preceding claims, **characterized in that**
- the ribs (32) comprise a concave curvature (42)
o with a radius (R) which lies in a plane extending through the planetary gear axis of rotation (APR),
o comprising a first end (90) and a second end (92), and
- the curvature (42)
o transitions, in the region of the first end (90), into the mounting section (24) or into the second mounting section (26) and, in the region of the second end (92), into the planetary gear abutment protrusions (40).

6. Planetary gear (10) in accordance with any of the preceding claims, **characterized in that**
- the gear rim (30) comprises a tooth base (34) between two adjacently arranged teeth (31), and
- at least one rib (32) is arranged radially in alignment with one of the tooth bases (34).

7. Planetary gear (10) in accordance with any of the preceding claims, **characterized in that** the first plurality (n1) is greater than the second plurality (n2).

8. Planetary gear (10) in accordance with claim 7,
**characterized in that** the first plurality (n1) exceeds the second plurality (n2) by an integer factor.

9. Planetary gear (10) in accordance with any of the preceding claims,
**characterized in that** the ribs (32)
- form a first rib group (36), having first ribs (321), and a second rib group (38), having second ribs (322), wherein
- the first ribs (321) are arranged on the first planetary gear end face (18) and the second ribs (322) are arranged on the second planetary gear end face (20), wherein
- the first ribs (321) are arranged turned to the second ribs (322) at a rotation angle which is in a plane extending vertically to the planetary gear axis of rotation (APR).

10. Planetary gear carrier (44) for a planetary gear (10) in accordance with any of the preceding claims, comprising a carrier body (46), which
- extends along a planetary gear carrier axis of rotation (APT),
- includes a first disc-shaped body (48) and
- a second disc-shaped body (50), wherein
- the first disc-shaped body (48) and the second disc-shaped body (50) are connected to each other by means of at least one connection body (52, 54, 56) and
- the first disc-shaped body (48) comprises a first mounting recess (60),
o into which the first mounting section (24) of the planetary gear (10) can be inserted, and
o which comprises at least one first latching projection (64) extending in circumferential direction, and
- the second disc-shaped body (50) comprises a second mounting recess (62),
o into which the second mounting section (26) of the planetary gear (10) can be inserted, and
o which comprises at least one second latching projection (66) extending in circumferential direction
**characterized in that**
- at least one first axial counter rotation surface (76) which surrounds the first mounting recess (60) is provided on the first disc-shaped body (48) and/or
- at least one second axial counter rotation surface (78) which surrounds the second mounting recess (62) is provided on the second disc-shaped body (50), wherein
- the first axial counter rotation surface (76) and/or the second axial counter rotation surface (78) interact(s) with the planetary gear abutment protrusions (40) when the planetary gear (10) has been inserted into the first mounting recess (60) and the second mounting recess (62), wherein
- the first axial counter rotation surface (76) adjoins, in the direction of the first mounting recess (60), a first inclined surface (80), which is inclined at a first inclined surface angle (α1) in relation to the first axial counter rotation surface (76) and/or
- the second axial counter rotation surface (78) adjoins, in the direction of the second mounting recess (62), a second inclined surface (82), which is inclined at a second inclined surface angle (α2) in relation to the second axial counter rotation surface (78).

11. Planetary gear carrier (44) in accordance with claim 10,
**characterized in that**
- the first axial counter rotation surface (76) transitions into the first inclined surface (80) over a first convex inclined surface curvature and/or
- the second axial counter rotation surface (78) transitions into the second inclined surface (82) over a second convex inclined surface curvature.

12. Planetary gear carrier (44) in accordance with either of claims 10 or 11,
**characterized in that** the carrier body (46) comprises
- at least one radial out connection body (52),
- at least one radial inner connection body (54), as well as
- at least one further connection body (56) arranged between the radial outer connection body (52) and the radial inner connection body (54), wherein
- the radial outer connection body (52), the radial inner connection body (54) and the further connection body (56) connect the first disc-shaped body (48) to the second disc-shaped body (50).

13. Planetary gear carrier (44) in accordance with claim 12,
**characterized in that** the further connection body (56) is connected to the radial outer connection body (52) and to the radial inner connection body (54).

14. Planetary gear carrier (44) in accordance with either of claims 12 or 13,
**characterized in that** the radial outer connection body (52) and the at least one further connection body (56) surround a closed recess (58) of the second disc-shaped body (50).

15. Planetary gear carrier (44) in accordance with any of claims 12 to 14,
**characterized in that**
- at least one of the further connection bodies (56) transitions into the first axial counter rotation surface (76) over a first concave curvature (871).

16. Planetary gear carrier (44) in accordance with claim 15,
**characterized in that**
- the first concave curvature (871) comprises
o a radius (R), as well as
o a first end (90) and a second end (92), and
- the first curvature (871) transitions into the first axial counter rotation surface (76) in the region of the first end (90) and transitions into the further connection bodies (56) in the region of the second end (92), wherein
- the radius (R) declines beginning at the first end (90) and at the second end (92).

17. Planetary gear carrier (44) in accordance with any of claims 10 to 16, **characterized in that** the first disc-shaped body (48) forms a first free planetary gear carrier end face (70) on which a plurality of stiffening ribs (72) is arranged.

18. Planetary gear carrier (44) in accordance with any of claims 10 to 17, **characterized in that**
- the first mounting recess (60) comprises a first extension (y1) along the planetary gear axis of rotation (APT), and
- the second mounting recess (62) comprises a second extension (y2) along the planetary gear axis of rotation (APT), wherein
- the first extension (y1) is larger than the second extension (y2).

19. Planetary gear carrier (44) in accordance with any of claims 10 to 18, **characterized in that** the planetary gear carrier comprises a plurality of first mounting recesses and a plurality of second mounting recesses, wherein, on the first disc-shaped body (48), a plurality of planetary gear abutment protrusions (74) are provided which are arranged adjacently to the first mounting recesses (60).

20. Planetary gear carrier (44) in accordance with any of claims 10 to 19, **characterized in that**
- an insert (68) of the planetary gear carrier (44) is connected to the first disc-shaped body, and **in that** the insert (68)
- has an attachment body (94), by means of which the insert (68) is connected to the carrier body (46), wherein
- the attachment body (94) comprises a connection surface which faces radially outwards and which
o forms at least one radial expansion (98) and
o a connection toothing (100).

## Revendications

1. Pignon satellite (10) pour un train épicycloïdal comprenant :
- un corps de pignon (16) avec une première surface frontale de pignon satellite (18) et une seconde surface frontale de pignon satellite (20),
- un axe de pignon satellite (22), qui
* définit un axe de rotation de pignon satellite (APR) du pignon satellite (10) et comprend :
* un premier segment de palier (24), et
* un second segment de palier (26),
* le premier segment de palier (24) dépassant de la première surface frontale de pignon satellite (18) et le second segment de palier (26) dépassant de la seconde surface frontale de pignon satellite (20),
- au moins un perçage de pignon satellite (28) coaxial au parallèle à l'axe de rotation de pignon satellite (APR) traverse au moins partiellement l'axe de pignon satellite (22),
pignon satellite **caractérisé en ce que** le corps de pignon (16) comprend :
- une première couronne dentée (30) avec un premier nombre (n1) de dents (31), et
- un second nombre (n2) de nervures (32),
* les nervures (32) passant entre l'axe de pignon satellite (22) et la couronne dentée (30),
dans lequel
- des reliefs d'attaque de pignon satellite (40) étant prévus sur les nervures (32) qui dépassent la couronne dentée (30) selon l'axe de rotation de pignon satellite, ou
- le corps de pignon (16) a au moins un relief d'attaque de pignon satellite (41) traversant, qui est entre les nervures (32) et la couronne dentée (30).

2. Pignon satellite (10) selon la revendication 1,
**caractérisé en ce que**
le pignon satellite (10) a exactement un perçage de pignon satellite (28) qui traverse tout le pignon satellite (10).

3. Pignon satellite (10) selon l'une des revendications 1 ou 2,
**caractérisé en ce que**
- le premier segment de palier (24), partant de la première surface frontale de pignon satellite (18), a une première extension (x1), et
- le second segment de pignon satellite (26), partant de la seconde surface frontale de pignon satellite (20), a une seconde extension (x2),
- la première extension (x1) étant différente de la seconde extension (x2).

4. Pignon satellite (10) selon l'une des revendications précédentes,
**caractérisé en ce que**
l'axe de pignon satellite (22) est formé par le corps de roue (16).

5. Pignon satellite (10) selon l'une des revendications précédentes,
**caractérisé en ce que**
- les nervures (32) ont une ondulation concave (42) avec,
* un rayon (R) qui est dans un plan passant par l'axe de rotation de pignon satellite (APR),
* une première extrémité (90) et une seconde extrémité (92), et
- l'ondulation (42),
* dans la zone de la première extrémité (90) passe dans le premier segment de palier (24) ou dans le second segment de palier (26), et
dans la zone de la seconde extrémité (92), il passe dans les reliefs d'attaque de pignon satellite (40).

6. Pignon satellite (10) selon l'une des revendications précédentes, **caractérisé en ce que**
- la couronne dentée (30), a un talon de dent (34) entre deux dents voisines (31), et
- au moins une nervure (32) est radialement dans l'alignement du talon de dent (34).

7. Pignon satellite (10) selon l'une des revendications précédentes,
**caractérisé en ce que**
le premier nombre (n1) est supérieur au second nombre (n2).

8. Pignon satellite (10) selon la revendication 7,
**caractérisé en ce que**
le premier nombre (n1) est supérieur d'un coefficient entier au second nombre (n2).

9. Pignon satellite (10) selon l'une des revendications précédentes,
**caractérisé en ce que** les nervures (32),
- forment un premier groupe de nervures (36) avec des premières nervures (321) et un second groupe de nervures (38) avec des secondes nervures (322),
- les premières nervures (321) sont sur la première surface frontale de pignon satellite (18) et des secondes nervures (322) sont sur la seconde surface frontale de pignon satellite (20),
- les premières nervures (321) sont tournées par rapport aux secondes nervures (322) d'un angle compris dans un plan perpendiculaire à l'axe de rotation du pignon satellite (APR).

10. Porte-satellites (44) pour un pignon satellite (10) selon l'une des revendications précédentes,
comprenant un corps de support (46) qui :
- s'étend selon l'axe de rotation de support satellite (APT),
- comprend un premier corps en forme de disque (48), et
- un second corps en forme de disque (50),
dont
- le premier corps en forme de disque (48) et le second corps en forme de disque (50) sont reliés l'un à l'autre par au moins un corps de liaison (52, 54, 56),
- le premier corps en forme de disque (48) a un premier logement de palier (60),
* qui peut recevoir le premier segment de palier (24) du pignon satellite (10), et
* qui a au moins un premier relief d'accrochage (64) s'étendant dans la direction périphérique, et
- le second corps en forme de disque (50) a un second évidement de palier (62),
* dans lequel se loge le second segment de palier (62) du pignon satellite (10), et
* qui a au moins un second relief d'accrochage (66) s'étendant dans la direction périphérique,
porte-satellites **caractérisé en ce que**
sur le premier corps en forme de disque (48), il y a au moins une première surface d'attaque, axiale, opposée (76) entourant le premier évidement de palier (60), et/ou
- sur le second corps en forme de disque (50), il y a au moins une seconde surface axiale, opposée (78) entourant le second évidement de palier (62), dans lequel
- la première surface d'attaque axiale, opposée (76) et/ou la seconde surface d'attaque axiale opposée (78) coopèrent avec les reliefs d'attaque de pignon satellite (40) lorsque le pignon satellite (10) vient dans le premier évidement de palier (60) ou le second évidement de palier (62), dans lequel
- la première surface d'attaque axiale, opposée (76) présente par rapport au premier évidement de palier (60), une première surface en rampe (80) qui est inclinée par rapport à la première surface d'attaque axiale, opposée (76) avec un premier angle d'inclinaison (α1), et/ou
- la seconde surface d'attaque axiale, opposée (78) est reliée au second évidement de palier (62) par une seconde surface inclinée (82) inclinée par rapport à la seconde surface d'attaque axiale, opposée (76) d'un second angle d'inclinaison (α2).

11. Porte-satellites (44) selon la revendication 10,
**caractérisé en ce que**
- la première surface d'attaque axiale, opposée (76) rejoint par une première surface ondulée, inclinée, convexe, la première surface inclinée (80), et/ou
- la seconde surface d'attaque axiale, opposée (78) rejoint par une seconde surface inclinée, ondulée, convexe, la seconde surface inclinée (82).

12. Porte-satellites (44) selon l'une des revendications 10 à 11,
**caractérisé en ce que**
le corps de support (46) a :
- au moins un corps de liaison radial extérieur (52),
- au moins un corps de liaison radial intérieur (54) ainsi que,
- un autre corps de liaison (56), entre le corps de liaison radial extérieur (52) et le corps de liaison radial intérieur (54),
- le corps de liaison radial extérieur (52), le corps de liaison radial intérieur (54) et l'autre corps de liaison (56) relient le premier corps en forme de disque (48) au second corps en forme de disque (50).

13. Porte-satellites (44) selon la revendication 12,
**caractérisé en ce que**
l'autre corps de liaison (56) est relié au corps de liaison radial extérieur (52) et au corps de liaison radial intérieur (54).

14. Porte-satellites (44) selon l'une des revendications 12 ou 13,
**caractérisé en ce que**
le corps de liaison radial extérieur (52) et au moins un autre corps de liaison (56) entourent un évidement fermé (58) du second corps en forme de disque (50).

15. Porte-satellites (44) selon l'une des revendications 12 à 14,
**caractérisé en ce que**
- au moins l'un des autres corps de liaison (56) rejoint par une première ondulation concave (871) la première surface d'attaque axiale opposée (76).

16. Porte-satellites (44) selon la revendication 15,
**caractérisé en ce que**
la première ondulation concave (871), a
* un rayon (R) ainsi que,
* une première extrémité (90) et une seconde extrémité (92), et
- la première ondulation (871) rejoint dans la zone de la première extrémité (90), la première surface d'attaque axiale, opposée (76) et dans la zone de la seconde extrémité (92), un autre corps de liaison (56),
* le rayon (R) diminue à partir de la première extrémité (90) et la seconde extrémité (92).

17. Porte-satellites (44) selon l'une des revendications 10 à 16,
**caractérisé en ce que**
le premier corps en forme de disque (48) a une première surface frontale libre de porte-satellites (70) qui a plusieurs nervures de rigidification (72).

18. Porte-satellites (44) selon l'une des revendications 10 à 17,
**caractérisé en ce que**
- le premier évidement de palier (60) a une première extension (y1) selon l'axe de rotation de porte-satellites (APT), et
- le second évidement de palier (62) a une seconde extension (y2) selon l'axe de rotation de porte-satellites (APT),
- la première extension (y1) étant supérieure à la seconde extension (y2).

19. Porte-satellites (44) selon l'une des revendications 10 à 18,
**caractérisé en ce qu'**il comprend :
plusieurs premiers évidements de palier et plusieurs seconds évidements de palier,
* le premier corps en forme de disque (48) ayant des reliefs d'attaque de porte-satellites (74) qui sont voisins des premiers évidements de palier (60).

20. Porte-satellites (44) selon l'une des revendications 10 à 19, **caractérisé en ce que**
- un insert (68) du porte-satellites (44) est relié au premier corps en forme de disque et l'insert (68) comprend :
- un corps de fixation (94) avec lequel l'insert (68) est relié au corps (46), dans lequel
- le corps de fixation (94) a une surface de liaison (96) tournée radialement vers l'extérieur et qui forme,
* au moins une extension radiale (98), et
* une denture de liaison (100).
